# EUROPEAN PATENT APPLICATION

(11) **EP 4 781 889 A1**
(43) Date of publication of application: **29.07.2026**
(21) Application number: 25839981.5
(22) Date of filing: 22.05.2025
(51) Int. Cl.: A47L 11/40, A47L 11/24, A47L 11/282

(54) **CLEANING ROBOT CONTROL METHOD AND CLEANING ROBOT**

(30) Priority: 17.07.2024 CN 202410956241
(71) Applicant: Dreame Innovation Technology (Suzhou) Co., Ltd., Suzhou, Jiangsu 215000 (CN)
(72) Inventor: QIAN, Hongzhi, Suzhou, Jiangsu 215000 (CN); ZHU, Yiming, Suzhou, Jiangsu 215000 (CN)
(74) Representative: reuteler & cie SA
(86) International application number: PCT/CN2025/096525
(87) International publication number: WO 2026/016630

(57) **Abstract**

Provided in the present application are a cleaning robot control method and a cleaning robot. The method comprises: when an obstacle is detected during the traveling of a cleaning robot, acquiring the height, width, depth and type of the obstacle by means of a sensor system; and when the height of the obstacle is greater than or equal to a first threshold value, the width and/or depth of the obstacle does not exceed a second threshold value, and the type of the obstacle is a preset graspable obstacle type, controlling a robotic arm to grasp the obstacle, wherein the first threshold value is an upper limit value of the distance between a lower surface of a robot body of a cleaning robot and the ground, and the second threshold value is an upper limit value of a grasping range of a grasping portion of the robotic arm. Therefore, a cleaning robot can accurately distinguish different types of obstacles under different conditions, and can perform targeted processing, so as to obtain a good cleaning effect.

## Description

### Cross Reference to Related Applications

This application claims priority to Chinese Patent Application No. 202410956241.7, filed on July 17, 2024, and entitled "CLEANING ROBOT CONTROL METHOD AND CLEANING ROBOT", which is incorporated herein by reference in its entirety.

### Technical Field

The present application relates to the technical field of smart home, and in particular to a cleaning robot control method and a cleaning robot.

### Background

With the development and popularization of technology, an increasing number of users have grown accustomed to using cleaning robots for indoor or outdoor cleaning tasks.

Based on existing cleaning robot control methods, most cleaning robots employ a uniform and fixed approach to handle different types of obstacles under different conditions, which often results in suboptimal cleaning effect and negatively impacts user experience.

### Summary

The present application provides a cleaning robot movement control method and a cleaning robot, which enable the cleaning robot to accurately distinguish different types of obstacles under different conditions and to perform targeted processing on specific types of obstacles under specific conditions by fully utilizing the advantages and characteristics of a robotic arm and a sensor system with matched processing approaches, thereby achieving a good cleaning effect.

The present application provides a cleaning robot control method for use in a cleaning robot provided with a robotic arm and a sensor system capable of acquiring three-dimensional obstacle information. The method includes: when an obstacle is detected during the traveling of the cleaning robot, acquiring a height, width, depth and type of the obstacle by means of the sensor system; and when the height of the obstacle is greater than or equal to a first threshold value, the width and/or depth of the obstacle does not exceed a second threshold value, and the type of the obstacle is a preset graspable obstacle type, controlling the robotic arm to grasp the obstacle, where the first threshold value is an upper limit value of a distance between a lower surface of a robot body of the cleaning robot and a ground, and the second threshold value is an upper limit value of a grasping range of a grasping portion of the robotic arm.

In an embodiment, the sensor system includes a first sensor system and a second sensor system; correspondingly, acquiring the height, width, depth and type of the obstacle by means of the sensor system includes: acquiring the height of the obstacle by means of the first sensor system disposed on the robot body of the cleaning robot; and when the height of the obstacle is greater than or equal to a critical height value, acquiring the width, depth and type of the obstacle by means of the second sensor system disposed on the robotic arm of the cleaning robot.

In an embodiment, the second sensor system is a binocular sensor system.

In an embodiment, acquiring the width, depth and type of the obstacle by means of the second sensor system disposed on the robotic arm of the cleaning robot includes: actuating the robotic arm such that the obstacle lies within a detection range of the second sensor system; and acquiring three-dimensional obstacle information by means of the second sensor system, where the three-dimensional obstacle information is used for determining the width, depth and type of the obstacle.

In an embodiment, the method further includes, posterior to controlling the robotic arm to grasp the obstacle, controlling the robotic arm to move and place the grasped obstacle in a first area; and performing a return cleaning operation.

In an embodiment, the method further includes, posterior to controlling the robotic arm to grasp the obstacle, controlling the robotic arm to lift the grasped obstacle to a position where a distance from the ground in a vertical direction is at least greater than a third threshold value; and maintaining the distance between the obstacle and the ground in the vertical direction to be at least greater than the third threshold value, and cleaning an area in which the obstacle is originally located.

In an embodiment, while maintaining the distance between the obstacle and the ground in the vertical direction to be at least greater than the third threshold value, the method further includes: maintaining an amplitude of displacement of the obstacle relative to the robot body of the cleaning robot in a horizontal direction to be less than a preset amplitude threshold value.

In an embodiment, the method further includes: in response to the type of the obstacle being a preset non-graspable obstacle type, adjusting a pose of the robotic arm such that at least a preset proportion of a projection of the robotic arm on the ground lies within a projection of the robot body of the cleaning robot on the ground; and performing a bypass cleaning operation.

In an embodiment, when the height of the obstacle is greater than or equal to the first threshold value, the method further includes: performing a steering operation; and acquiring three-dimensional obstacle information by means of the first sensor system disposed on the robot body, where the three-dimensional obstacle information is used for determining the width, depth and type of the obstacle.

In an embodiment, when the height of the obstacle is greater than or equal to the first threshold value and the width and depth of the obstacle exceed the second threshold value, the method further includes: in response to the type of the obstacle being a preset pushable obstacle type, controlling the robotic arm to push the obstacle.

In an embodiment, when the height of the obstacle is greater than or equal to the first threshold value, and the width and depth of the obstacle exceed the second threshold value, in response to the type of the obstacle being the preset pushable obstacle type, the method further includes: controlling the robotic arm to push the obstacle away from an area in which the obstacle is originally located; and adjusting a pose of the robotic arm such that at least a preset proportion of a projection of the robotic arm on the ground lies within a projection of the robot body of the cleaning robot on the ground, and cleaning the area in which the obstacle is originally located.

In an embodiment, when the height of the obstacle is greater than or equal to the first threshold value and the width and depth of the obstacle exceed the second threshold value, the method further includes: in response to the type of the obstacle being a preset non-pushable obstacle type, performing a bypass cleaning operation.

In an embodiment, the method further includes: when the height of the obstacle is less than the first threshold value, in response to the type of the obstacle being a preset suctionable obstacle type, moving in a current direction of travel; and suctioning the obstacle through a main brush chamber.

In an embodiment, the method further includes: in response to the type of the obstacle being a preset non-suctionable obstacle type, performing a bypass cleaning operation.

In an embodiment, in response to the type of the obstacle being the preset non-suctionable obstacle type, the method further includes: controlling the robotic arm to push the obstacle away from an area in which the obstacle is originally located; and adjusting a pose of the robotic arm such that at least a preset proportion of a projection of the robotic arm on the ground lies within a projection of the robot body of the cleaning robot on the ground, and cleaning the area in which the obstacle is originally located.

The present application further provides a cleaning robot control method for use in a cleaning robot provided with a robotic arm and a sensor system capable of acquiring three-dimensional obstacle information. The method includes: when an obstacle is detected during the traveling of the cleaning robot, acquiring a height of the obstacle and a viewing angle of the cleaning robot relative to the obstacle by means of the sensor system; when the height of the obstacle is greater than or equal to a first threshold value and the viewing angle of the cleaning robot relative to the obstacle is greater than a fourth threshold value, acquiring a height, width, depth and type of the obstacle by means of the sensor system disposed on the robotic arm of the cleaning robot; and when the height of the obstacle is greater than or equal to the first threshold value, the width and/or depth of the obstacle does not exceed a second threshold value, and the type of the obstacle is a preset graspable obstacle type, controlling the robotic arm to grasp the obstacle, where the first threshold value is an upper limit value of a distance between a lower surface of a robot body of the cleaning robot and a ground, and the second threshold value is an upper limit value of a grasping range of a grasping portion of the robotic arm.

In an embodiment, the method further includes, posterior to controlling the robotic arm to grasp the obstacle, controlling the robotic arm to move and place the grasped obstacle in a first area; and performing a return cleaning operation.

In an embodiment, the method further includes: in response to the type of the obstacle being a preset non-graspable obstacle type, adjusting a pose of the robotic arm such that at least a preset proportion of a projection of the robotic arm on the ground lies within a projection of the robot body of the cleaning robot on the ground; and performing a bypass cleaning operation.

In an embodiment, the viewing angle of the cleaning robot relative to the obstacle is an included angle formed by tangents to an outer peripheral boundary of the obstacle from a first reference point of the cleaning robot; where the first reference point is a point of points of intersection of a boundary of the robot body of the cleaning robot and a central axis of the cleaning robot that is close to the obstacle in a current direction of travel, and the central axis of the cleaning robot is parallel to the current direction of travel of the cleaning robot.

In an embodiment, when the viewing angle includes a horizontal viewing angle, the fourth threshold value includes a horizontal angle-of-view threshold value; and when the viewing angle includes a vertical viewing angle, the fourth threshold value includes a vertical angle-of-view threshold value; and when the viewing angle includes both a horizontal viewing angle and a vertical viewing angle, the fourth threshold value includes a horizontal angle-of-view threshold value and a vertical angle-of-view threshold value.

The present application further provides a cleaning robot, including a robot body, a sensor system capable of acquiring three-dimensional obstacle information, a robotic arm, a processor, and a memory for storing processor-executable instructions; where during the traveling of the cleaning robot, the instructions, when executed by the processor, cause steps of the cleaning robot control method to be implemented.

The present application further provides a computer-readable storage medium. The computer-readable storage medium includes a program stored therein. The program, when executed, causes relevant steps of the cleaning robot control method to be performed.

According to the cleaning robot control method and the cleaning robot provided with a sensor system capable of acquiring three-dimensional obstacle information and a robotic arm provided in the present application, when an obstacle is detected during the traveling of the cleaning robot, a height, width, depth and type of the obstacle can be acquired by means of the sensor system; when the height of the obstacle is greater than or equal to a first threshold value and the width and/or depth of the obstacle does not exceed a second threshold value, it can be determined that the current obstacle is relatively high and cannot be suctioned into a dust box through a main brush chamber and that the obstacle has a relatively small size and can be grasped normally by the robotic arm; further, in response to the type of the obstacle being a preset graspable obstacle type, it can be determined that the current obstacle is suitable for being grasped by the robotic arm; and the robotic arm can then be controlled to grasp the obstacle, where the first threshold value is an upper limit value of a distance between a lower surface of a robot body of the cleaning robot and a ground, and the second threshold value is an upper limit value of a grasping range of a grasping portion of the robotic arm. By acquiring and using the height, width, depth and type of obstacles, the cleaning robot can accurately distinguish different types of obstacles under different conditions; and targeted processing can be performed on different types of obstacles under different conditions by fully utilizing the advantages and characteristics of the robotic arm and the sensor system with matched processing approaches, so as to obtain relatively comprehensive and detailed obstacle information. Moreover, by precisely and flexibly cooperating with cleaning components, cleaning tasks can be effectively completed, so as to achieve a good cleaning effect.

### Brief Description of the Drawings

In order to more clearly illustrate embodiments of the present application, the accompanying drawings required for the embodiments will be briefly described below. The drawings in the following description are only some embodiments of the present application, and those skilled in the art can obtain other drawings from the drawings without any inventive effort.
FIG. 1 is a schematic diagram illustrating an embodiment of a structural configuration of the back of a robot body of a cleaning robot in which a cleaning robot control method according to embodiments of the present application is implemented;
FIG. 2 is a schematic diagram illustrating an embodiment of a structural configuration of the front of the robot body of the cleaning robot in which a cleaning robot control method according to embodiments of the present application is implemented;
FIG. 3 is a schematic diagram illustrating an embodiment of a structural configuration of a robotic arm of the cleaning robot in which a cleaning robot control method according to embodiments of the present application is implemented;
FIG. 4 is a schematic flowchart of a cleaning robot control method according to an embodiment of the present application;
FIG. 5 is a schematic diagram of a scenario example in which an embodiment of a cleaning robot control method according to embodiments of the present application is implemented;
FIG. 6 is a schematic diagram of a scenario example in which an embodiment of a cleaning robot control method according to embodiments of the present application is implemented;
FIG. 7 is a schematic diagram of a scenario example in which an embodiment of a cleaning robot control method according to embodiments of the present application is implemented;
FIG. 8 is a schematic diagram of a scenario example in which an embodiment of a cleaning robot control method according to embodiments of the present application is implemented;
FIG. 9 is a schematic diagram of a scenario example in which an embodiment of a cleaning robot control method according to embodiments of the present application is implemented;
FIG. 10 is a schematic flowchart of a cleaning robot control method according to an embodiment of the present application;
FIG. 11 is a schematic diagram of a scenario example in which an embodiment of a cleaning robot control method according to embodiments of the present application is implemented;
FIG. 12 is a schematic diagram of a structural configuration of a cleaning robot according to an embodiment of the present application; and
FIG. 13 is a schematic diagram of a structural configuration of a cleaning robot control apparatus according to an embodiment of the present application.

### Detailed Description of Embodiments

To enable those skilled in the art to better understand the technical solutions disclosed in the present application, the technical solutions in the embodiments of the present application are clearly and completely described below with reference to the drawings in the embodiments of the present application. Apparently, the embodiments described are merely some rather than all of the embodiments of the present application. All the other embodiments obtained by those of ordinary skill in the art based on the embodiments of the present application without involving any inventive effort shall fall within the scope of protection of the present application.

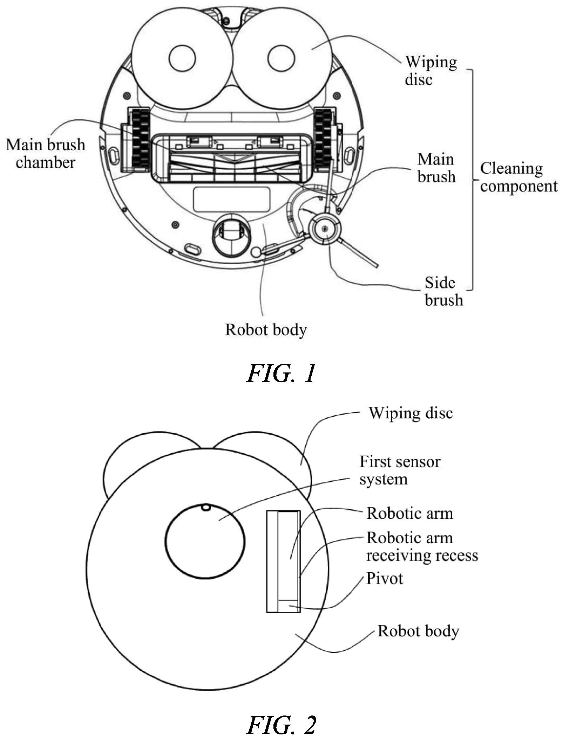

An embodiment of the present application provides a cleaning robot, as shown in FIG. 1.

The cleaning robot may be specifically an autonomous robot capable of moving autonomously within a working area and completing cleaning tasks autonomously, without external manual information input or control. The working area may include indoor and outdoor areas. The indoor areas may include home rooms, offices, shopping malls, factory workshops, etc. The outdoor areas may include lawns, gardens, roads, etc. The cleaning tasks may include sweeping (e.g., floor washing, mopping and sweeping, etc.), lawn mowing, snow removal, etc.

The cleaning robot includes, but is not limited to: a sweeping robot, a floor washing robot, a sweeping and mopping integrated robot, a robotic lawn mower, a robotic snow sweeper, etc. The cleaning robot may perform cleaning in a sweepthen-mop manner or a separate sweeping and mopping manner. Here, the sweepthen-mop manner allows the cleaning robot to sweep while mopping, which can improve cleaning efficiency. The separate sweeping and mopping manner allows the cleaning robot to sweep first and then mop once sweeping is finished, which can improve cleaning effect.

Specifically, as shown in FIG. 1, the cleaning robot includes at least a robot body, a controller, one or more cleaning components, and a sensor system capable of acquiring three-dimensional obstacle information.

The cleaning components may specifically include one or more of side brushes, a main brush (also referred to as a roller brush), wiping discs (or referred to as mop discs), etc.

Specifically, the robot body may be circular, square or in other shapes. For example, one part of the robot body may be circular and the other part thereof may be square.

The controller may include a Microcontroller Unit (MCU). Of course, the controller may further include other devices with control functions.

The cleaning components may be circular, square or in other shapes (e.g., semicircular, curved, triangular, or other irregular shapes). The circular shape facilitates rotational cleaning by the cleaning components. The irregular shapes facilitate cleaning of corner areas by the cleaning components.

The side brushes can gather debris and move the debris toward the bottom center of the cleaning robot. The main brush can sweep up debris from the bottom of the cleaning robot, allowing the debris to enter a dust box through a suction port. The wiping discs are used for floor wiping or mopping.

Specifically, the wiping discs are provided with wiper cloth. The cleaning robot is provided with a water tank. Water in the water tank flows to the wiper cloth through holes to wet the wiper cloth. The wet wiper cloth is used for floor mopping.

The main brush is disposed in a main brush chamber at the bottom of the robot body of the cleaning robot. The main brush chamber is in communication with a suction channel of the cleaning robot. Small-sized debris such as dust and hair swept up by the main brush and/or side brushes is suctioned into the cleaning robot through the main brush chamber.

The sensor system may be disposed on the robot body of the cleaning robot (which may be referred to as a first sensor system) and can acquire at least three-dimensional obstacle information. The cleaning robot may detect and identify the obstacle based on the three-dimensional obstacle information acquired by the sensor system. Furthermore, the controller may control the cleaning robot accordingly based on the detected and identified obstacle.

The sensor system may specifically include one or more of a monocular vision sensor, a binocular vision sensor, a line laser sensor, an area laser sensor, an LDS sensor, a Dtof sensor, an Itof sensor, etc.

Specifically, the monocular vision sensor may acquire a projection image of an object on a two-dimensional plane by means of a single camera, and the image may carry information such as the shape, size, color and texture of the object. The binocular vision sensor may simulate the human vision and acquire three-dimensional object information by means of two cameras.

The line laser sensor may be a sensor that performs measurements using a line laser. The area laser sensor may be a sensor that performs measurements using an area laser.

The Laser Direct Structuring (LDS) sensor may be an optical sensor that implements laser ranging using triangulation method. The Direct Time of Flight (Dtof) sensor is also referred to as a time-of-flight depth sensor. The Dtof sensor may implement depth sensing by emitting infrared laser pulses by a Dtof camera and measuring the time required for the pulses to travel from the camera to a target and return. The indirect Time-of-Flight (Itof) sensor may specifically refer to a longrange anti-interference Itof depth image sensor. The Itof sensor may acquire depth information of a target by emitting modulated infrared signals into a scene, receiving light signals reflected from the target to be measured in the scene, and calculating a phase difference between the emitted and received signals based on accumulated charges during the exposure (integration) period.

Of course, it should be noted that the sensors described above are for illustrative purposes only. In a specific implementation, the sensor system may further include other types of sensors such as infrared sensors, according to specific conditions and processing requirements.

Specifically, two-dimensional obstacle information (e.g., a planar image, etc.) within a certain range, and depth information may be collected by means of the sensor system. The two-dimensional obstacle information and the depth information are then fused to obtain the corresponding three-dimensional obstacle information. Further, accurate detection and identification of the obstacle may be achieved based on the three-dimensional obstacle information, and abundant feature information such as shape, size and texture of the obstacle may be acquired.

Specifically, in some embodiments, the sensor system may include a binocular camera disposed at a front portion of the cleaning robot. In a specific implementation, the cleaning robot may acquire, by using the binocular camera, image information of an object in the environment where the cleaning robot is located in wavebands such as visible light and/or infrared light, so as to identify the type and boundary range of the object; moreover, the cleaning robot may calculate the three-dimensional shape and distance of the object based on the parallax between the two cameras, so as to obtain the corresponding three-dimensional obstacle information. Furthermore, based on the three-dimensional information, such as the type, boundary range, three-dimensional shape and distance, of the obstacle, obstacle avoidance may be performed, and functions such as dirt detection, cleaning surface material detection, threshold and step detection, room and furniture recognition, and human or pet recognition may be implemented.

In some other embodiments, the sensor system may further include a monocular camera and a structured light sensor (e.g., a line laser sensor, a cross light sensor, etc.) disposed at a front portion of the cleaning robot. In this way, the cleaning robot may acquire, by using the monocular camera, image information of an object in the environment where the cleaning robot is located in wavebands such as visible light and/or infrared light, so as to identify the type and boundary range of the object. The cleaning robot may also detect the three-dimensional shape and distance of the object by the structured light sensor in combination with motion scanning of the robot, or in combination with rotation or movement of an LDS sensor, so as to obtain the corresponding three-dimensional obstacle information. Furthermore, based on the three-dimensional obstacle information, such as the type, boundary range, three-dimensional shape and distance of the obstacle, obstacle avoidance may be performed, and functions such as dirt detection, cleaning surface material detection, threshold and step detection, room and furniture recognition, and human or pet recognition may be implemented.

Specifically, for example, an obstacle detection model pretrained based on an artificial intelligence algorithm may be used to intelligently detect and identify the obstacle by processing the three-dimensional obstacle information acquired by means of the sensor system, so as to determine the specific type of the obstacle, and obtain feature information such as the shape, size (e.g., height, width, length, etc.), and texture of the obstacle.

Further, as shown in FIG. 2, the cleaning robot may further include a robotic arm. The robot body may also be provided with a robotic arm receiving recess that matches the robotic arm. A pivot may also be fixedly provided in the robotic arm receiving recess. The robotic arm is connected to the pivot.

Specifically, as shown in FIG. 2, the robotic arm may be retracted and placed in the robotic arm receiving recess when the robotic arm is not actuated for use.

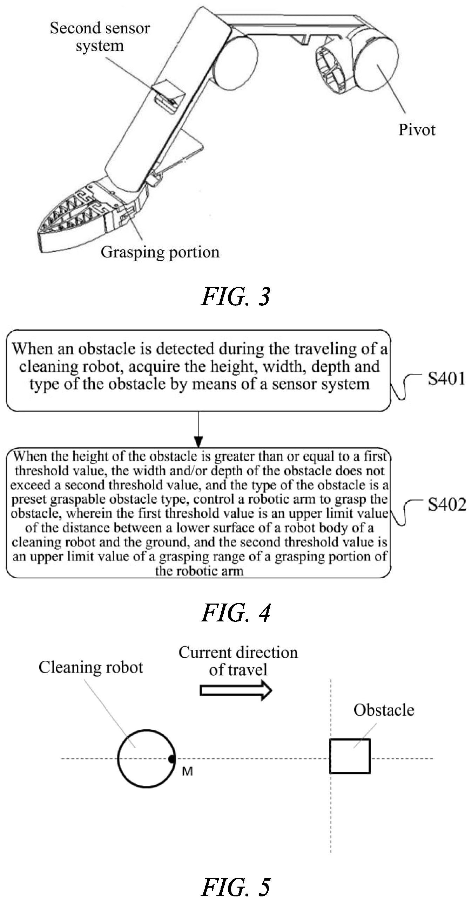

As shown in FIG. 3, when the robotic arm is actuated for use, the robotic arm may rotate and extend about the pivot as a fulcrum, so that the robotic arm can be used to complete specific actions, such as grasping and pushing.

Specifically, as shown in FIG. 3, the robotic arm is provided with at least a grasping portion, e.g., a gripper, etc. Correspondingly, the cleaning robot may grasp a specific article by using the grasping portion of the robotic arm.

The robotic arm may also be provided with a sensor system (which may be referred to as a second sensor system), e.g., a binocular sensor system, etc. Correspondingly, three-dimensional obstacle information may be acquired by using the sensor system disposed on the robotic arm.

It should be noted that the robotic arm and the robotic arm receiving recess described above are for illustrative purposes only. In a specific implementation, other types of robotic arms and other types of robotic arm receiving recesses may also be included according to specific application scenarios and processing requirements, which are not limited in the present application.

As shown in FIG. 4, an embodiment of the present application provides a cleaning robot control method. Here, the cleaning robot control method is applied to a cleaning robot provided with a robotic arm and a sensor system capable of acquiring three-dimensional obstacle information. In a specific implementation, the method may include:
S401: when an obstacle is detected during the traveling of the cleaning robot, acquiring a height, width, depth and type of the obstacle by means of the sensor system; and
S402: when the height of the obstacle is greater than or equal to a first threshold value, the width and/or depth of the obstacle does not exceed a second threshold value, and the type of the obstacle is a preset graspable obstacle type, controlling the robotic arm to grasp the obstacle, where the first threshold value is an upper limit value of a distance between a lower surface of a robot body of the cleaning robot and a ground, and the second threshold value is an upper limit value of a grasping range of a grasping portion of the robotic arm.

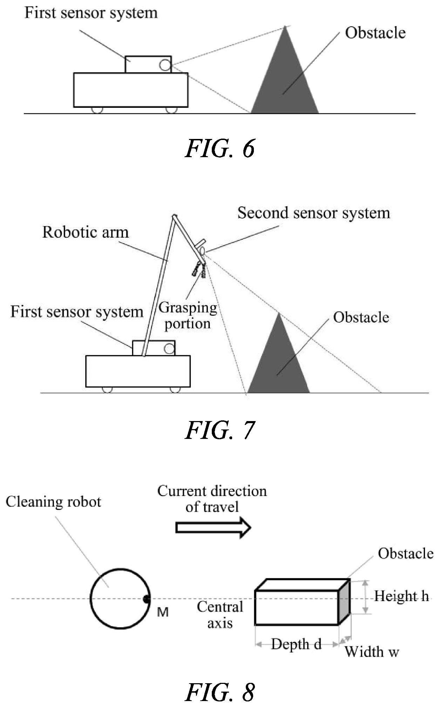

The height, width and depth of the obstacle may be as shown in FIG. 8.

The height refers to a distance between a highest point of the obstacle and a working surface, the width refers to a maximum lateral dimension of the obstacle facing the cleaning robot, and the depth refers to a maximum dimension in a direction of travel of the cleaning robot.

Specifically, the depth of the obstacle may be specifically a maximum distance between two points of intersection of the obstacle and a central axis. The central axis is parallel to a current direction of travel of the cleaning robot and is parallel to the ground. The width of the obstacle may be specifically a maximum distance between two points of intersection of the obstacle and a first reference line. The first reference line is a straight line that is displaced along the central axis, is parallel to the ground, and is perpendicular to the current direction of travel of the cleaning robot. The height of the obstacle may be specifically a maximum height of a projection of the obstacle on a plane perpendicular to the central axis.

In a specific implementation, three-dimensional obstacle information of the obstacle may be acquired by means of the sensor system. The three-dimensional obstacle information may specifically include dimensional information such as the height, width, and depth of the obstacle.

Further, the type of the obstacle may be identified and determined based on the three-dimensional obstacle information.

Based on the above embodiments, when an obstacle is relatively high and can be grasped by the robotic arm, and the obstacle belongs to the preset graspable obstacle type and is suitable for being grasped by the robotic arm, the obstacle may be grasped by the robotic arm, so as to prevent the obstacle from interfering with a cleaning process and achieve a good cleaning effect.

Specifically, the traveling process of the cleaning robot may refer to a process in which the cleaning robot moves while cleaning, or a process in which the cleaning robot moves only without cleaning, etc.

Further, the traveling process may specifically follow a straight path, an arcuate path, or an irregular path, etc.

Generally, during traveling, the cleaning robot may detect whether an obstacle is present in the area ahead in real time or at regular intervals by means of the sensor system.

According to existing cleaning robots and cleaning robot control methods, when an unknown obstacle is detected, the cleaning robot usually does not distinguish the type of the obstacle and continues traveling along an original path, continuously rotates side brushes during traveling, in order to sweep the obstacle under the robot body of the cleaning robot, and then suctions the obstacle into a dust box through a main brush chamber disposed on the lower side of the robot body to complete cleaning tasks.

However, during actual cleaning, the applicants have found that when an obstacle is relatively high, it is often difficult for the cleaning robot to sweep the obstacle into the space under the robot body of the cleaning robot, so that the obstacle cannot be smoothly suctioned into the dust box through the main brush chamber, thus affecting the cleaning effect.

Alternatively, according to existing cleaning robots and cleaning robot control methods, the cleaning robot directly performs an avoidance action once detecting an obstacle, resulting in failure to effectively clean the area where the obstacle is located, thus affecting the cleaning effect.

Further, the applicants have also found that during actual cleaning, the conditions and types of obstacles encountered by the cleaning robot are often diverse and complex.

For example, some obstacles are obstacles to be cleaned, such as trash; and some obstacles are obstacles not to be cleaned, such as furniture and potted plants.

Further, the obstacles to be cleaned may be further classified into: obstacles that can be suctioned directly into the dust box through the main brush chamber (e.g., relatively low-height obstacles such as paper scraps and hair), and obstacles that cannot be suctioned directly into the dust box through the main brush chamber (e.g., relatively high-height obstacles such as packaging cartons and foam boxes), etc.

As another example, due to the limitation of the grasping range of the grasping portion of the robotic arm, some obstacles have a larger volume and cannot be grasped by the robotic arm; and some obstacles have a smaller volume and can be grasped by the robotic arm. As yet another example, some obstacles are suitable for being grasped by the robotic arm due to factors such as material and value; and some obstacles are not suitable for being grasped by the robotic arm due to factors such as material and value.

The obstacles that can be grasped by the robotic arm may be further classified into preset graspable obstacles and preset non-graspable obstacles. The preset graspable obstacles may specifically include light, non-fragile and inexpensive obstacles, such as plastic stools and cartons. The preset non-graspable obstacles may include heavy, fragile and expensive obstacles, such as vases and fish tanks.

The obstacles that cannot be grasped by the robotic arm may be further classified into preset pushable obstacles and preset non-pushable obstacles. The preset pushable obstacles may specifically include light, non-fragile and inexpensive obstacles; and the preset non-pushable obstacles may specifically include heavy, fragile and expensive obstacles.

Furthermore, the applicants have also found that since different types of obstacles under different conditions possess distinct properties and characteristics, different processing approaches are accordingly used by the cleaning robot to handle such obstacles during the cleaning process.

For example, for an obstacle that has a relatively small size and is suitable for being grasped, a preferred processing approach is to grasp and lift the obstacle in place and then clean an area in which the obstacle is originally located; and place the obstacle back in the area in which the obstacle is originally located after the area in which the obstacle is originally located is cleaned.

As another example, for an obstacle that has a relatively large size and is suitable for being pushed away, a preferred processing approach is to push the obstacle out of the area in which the obstacle is originally located and then clean this area; and push the obstacle back to the area in which the obstacle is originally located after this area is cleaned.

However, the existing cleaning robots do not support such conditions and types of obstacles described above and the processing approaches for such obstacles, and such aspects are not considered at all in the existing cleaning robot control methods.

Having recognized the above problems, and in combination with the specific causes thereof, the applicants propose to fully utilize the advantages and characteristics of the sensor system and the robotic arm. By virtue of the structural advantages of the robotic arm, a sensor system disposed on the robot body of the cleaning robot (which may be referred to as a first sensor system) and a sensor system disposed on the robotic arm (which may be referred to as a second sensor system) can be used in combination to collect more comprehensive and accurate three-dimensional obstacle information. Moreover, based on the three-dimensional obstacle information, the specific condition and type of the obstacle can be precisely distinguished; and corresponding processing is performed on different types of obstacles under different conditions with matched processing approaches by virtue of the robotic arm cooperating with the operation of the cleaning components, thereby completing the cleaning tasks more effectively and achieving a better cleaning effect.

In this embodiment, the sensor system may specifically include one or more of a monocular vision sensor, a binocular vision sensor, a line laser sensor, an area laser sensor, an LDS sensor, a Dtof sensor, an Itof sensor, etc.

In an embodiment, as shown in FIG. 5, when an obstacle is detected as the cleaning robot travels in a current direction, the height, width, depth and type of the obstacle may be acquired by means of the sensor system.

As shown in FIG. 8, the height of the obstacle may be specifically understood as a maximum vertical distance between the obstacle and the ground, and may be denoted as h. The width of the obstacle may be specifically understood as a maximum distance of the obstacle in a direction perpendicular to the current direction of travel of the cleaning robot, and may be noted as w. The depth of the obstacle may be specifically understood as a maximum distance of the obstacle in a direction parallel to the current direction of travel of the cleaning robot, and may be noted as d.

In a specific implementation, some specific sensors (e.g., ranging sensors or height-measuring sensors) in the sensor system can be used to directly measure the height, width and depth of the obstacle. Alternatively, the sensor system may first be used to acquire three-dimensional obstacle information; and the height, width, and depth of the obstacle may then be determined based on the three-dimensional obstacle information. A pretrained obstacle detection model may be used to intelligently detect and identify the obstacle by processing the three-dimensional obstacle information acquired by means of the sensor system, so as to determine the type of the obstacle.

In an embodiment, the cleaning robot may acquire information such as the height, width and depth of the obstacle by means of the sensor system; and determine the specific condition of the obstacle based on the acquired information such as the height, width and depth of the obstacle.

In a specific implementation, after information such as the height, width and depth of the obstacle is obtained, the height of the obstacle may be compared to a first threshold value to obtain a corresponding first comparison result, and the width and depth of the obstacle may also be compared to a second threshold value to obtain a corresponding second comparison result.

The first threshold value may be specifically an upper limit value of a distance between a lower surface of the robot body of the cleaning robot and the ground. The second threshold value may be specifically an upper limit value of a grasping range of a grasping portion of the robotic arm.

Specifically, for example, the grasping range of the grasping portion may be a maximum range when the grasping portion is open.

In a specific implementation, based on the first comparison result, when it is determined that the height of the obstacle is greater than or equal to the first threshold value, it can be determined that the height of the obstacle is relatively high, and the obstacle cannot enter the space under the robot body of the cleaning robot. Accordingly, the cleaning robot cannot directly suction the obstacle into the dust box through the main brush chamber.

Conversely, based on the first comparison result, when it is determined that the height of the obstacle is less than the first threshold value, it can be determined that the height of the obstacle is relatively low, and the obstacle can enter the space under the robot body of the cleaning robot. Accordingly, the obstacle can be suctioned directly into the dust box through the main brush chamber.

Also, it can be determined whether the obstacle exceeds the second threshold value based on the width and depth of the obstacle.

In one case, based on the second comparison result, when it is determined that the width of the obstacle is less than or equal to the second threshold value and the depth of the obstacle is less than or equal to the second threshold value, it is determined that the obstacle does not exceed the second threshold value, and accordingly it can be determined that the dimensions of the obstacle fall within the effective grasping range of the grasping portion of the robotic arm. Thus, as the grasping portion of the robotic arm can smoothly grasp the obstacle, the obstacle is one that can be grasped by the robotic arm.

Conversely, based on the second comparison result, when it is determined that the width of the obstacle is greater than the second threshold value and the depth of the obstacle is greater than the second threshold value, it is determined that the obstacle exceeds the second threshold value, and accordingly it can be determined that the dimensions of the obstacle exceed the effective grasping range of the grasping portion of the robotic arm. Thus, as the grasping portion of the robotic arm cannot smoothly grasp the obstacle, the obstacle is one that cannot be grasped by the robotic arm.

In another case, based on the second comparison result, when it is determined that at least one of the width and depth of the obstacle is less than or equal to the second threshold value, it is determined that the width and/or depth of the obstacle does not exceed the second threshold value and that the obstacle does not exceed the second threshold value, and accordingly it can be determined that the robotic arm can smoothly grasp the obstacle after adjusting its grasping direction and position, that is, the obstacle is one that can be grasped by the robotic arm.

Conversely, based on the second comparison result, when it is determined that both the width and depth of the obstacle are greater than the second threshold value, it is determined that the width and depth of the obstacle exceed the second threshold value and that the obstacle exceeds the second threshold value, and accordingly it can be determined that the robotic arm cannot smoothly grasp the obstacle even if it adjusts its grasping direction and position, that is, the obstacle is one that cannot be grasped by the robotic arm.

In this embodiment, when the height of the obstacle is greater than or equal to the first threshold value, and the width and/or depth of the obstacle does not exceed the second threshold value, it can be determined that the current obstacle cannot be suctioned into the dust box through the main brush chamber and can be grasped by the robotic arm, that is, the condition of the obstacle meets a grasping condition.

Moreover, based on the type of the obstacle, it can be determined whether the type of the obstacle is the preset graspable obstacle type.

Specifically, the type of the obstacle can be matched against a preset graspable obstacle type list; if the match fails, it is determined that the type of the obstacle is a preset non-graspable obstacle type, and the obstacle is not suitable for being grasped by the robotic arm, that is, the type of the obstacle does not meet the grasping condition.

Conversely, if the match is successful, it is determined that the type of the obstacle is a preset graspable obstacle type, and the obstacle is suitable for being grasped by the robotic arm, that is, the type of the obstacle meets the grasping condition.

In the way described above, when both the condition and type of the obstacle meet the grasping condition, the cleaning robot can control the robotic arm to actively grasp the obstacle to effectively complete the cleaning tasks and achieve a good cleaning effect.

Based on the above embodiments, information such as the height, width, depth and type of the obstacle may be acquired by means of the sensor system, and different types of obstacles under different conditions may be distinguished based on the information. The cleaning robot performs targeted processing on different types of obstacles under different conditions with matched processing approaches, so as to achieve a good cleaning effect. Specifically, obstacles that meet the grasping condition in terms of both their conditions and types can be grasped by the robotic arm.

In an embodiment, the cleaning robot may also acquire three-dimensional obstacle information by means of the sensor system; and determine the specific type of the obstacle based on the acquired three-dimensional obstacle information.

Further, the cleaning robot may also determine a matched processing strategy based on the type of the obstacle; and then control the operation of the robotic arm according to the matched processing strategy to better complete the cleaning tasks.

In a specific implementation, the three-dimensional obstacle information may be processed using a pretrained obstacle detection model to obtain a corresponding obstacle detection result; and the type of the obstacle is determined based on the obstacle detection result. The obstacle detection model may be specifically understood as a neural network model trained in advance using three-dimensional obstacle information from a large number of sample and capable of automatically identifying and determining the type of an obstacle.

A matched processing strategy is then determined by querying a preset processing strategy set based on the type of the obstacle. The preset processing strategy set includes a plurality of preset processing strategies, each preset processing strategy corresponding to at least one type of obstacle.

In an embodiment, the types of obstacles may specifically include: preset graspable obstacles and preset non-graspable obstacles. The types of obstacles may further include: preset pushable obstacles and preset non-pushable obstacles.

Furthermore, the types of obstacles may further include: obstacles to be cleaned and obstacles not to be cleaned, etc.

In an embodiment, when the height of the obstacle is greater than or equal to the first threshold value and the width and/or depth of the obstacle does not exceed the second threshold value, and when it is determined that the obstacle indicated by the three-dimensional obstacle information is an obstacle to be cleaned based on the obstacle detection result, the cleaning robot may control the robotic arm to grasp the obstacle according to the matched processing strategy, and control the robotic arm to place the grasped obstacle into a nearby garbage collection location (e.g., a trash can, etc.).

In some cases, a trash can or a trash bag may be provided on the robot body of the cleaning robot. Correspondingly, the cleaning robot may also control the robotic arm to place the grasped obstacle into the trash can or the trash bag according to the matched processing strategy. In this way, the robotic arm can be used to efficiently and accurately remove the obstacle to be cleaned, thereby achieving a good cleaning effect.

When the height of the obstacle is greater than or equal to the first threshold value and the width and/or depth of the obstacle does not exceed the second threshold value, and when it is determined that the obstacle indicated by the three-dimensional obstacle information is an obstacle not to be cleaned based on the obstacle detection result, the cleaning robot may control the robotic arm to grasp the obstacle according to the matched processing strategy, control the robotic arm to lift the grasped obstacle off the ground, for example, to a position spaced by at least a third threshold value from the ground, then perform an in-situ cleaning operation to clean the area in which the obstacle is originally located, and control the robotic arm to lower the obstacle after this area is cleaned. The third threshold value may specifically be a distance value between an upper surface of the robot body of the cleaning robot and the ground. In this way, the robotic arm can be used to efficiently and precisely clean the area where the obstacle not to be cleaned is located, thereby achieving a good cleaning effect.

In an embodiment, and in a specific implementation, when the height of the obstacle is greater than or equal to the first threshold value, and the width and/or depth of the obstacle does not exceed the second threshold value, it can be detected whether the type of the obstacle is the preset graspable obstacle type.

When it is determined that the type of the obstacle is the preset graspable obstacle type, the robotic arm can be controlled to grasp the obstacle to complete a corresponding cleaning task.

Conversely, when it is determined that the type of the obstacle is the preset non-graspable obstacle type, the robotic arm can be controlled not to grasp the obstacle, but instead perform a bypass cleaning operation to complete the corresponding cleaning task.

In addition, when it is determined that the type of the obstacle is the preset non-graspable obstacle type, it can be further detected whether the type of the obstacle is a preset pushable obstacle type.

When it is determined that the type of the obstacle is the preset pushable obstacle type, the robotic arm can be controlled to push the obstacle away to complete the corresponding cleaning task.

Conversely, when it is determined that the type of the obstacle is a preset non-pushable obstacle type, the robotic arm can be controlled to neither grasp nor push the obstacle, but instead perform a bypass cleaning operation to complete the corresponding cleaning task.

Based on the above embodiments, the cleaning robot may also acquire three-dimensional obstacle information by means of the sensor system, determine the type of the obstacle based on the three-dimensional obstacle information, then precisely distinguish different types of obstacles under different conditions, and perform targeted processing on different types of obstacles under different conditions with matched processing approaches, so as to achieve a good cleaning effect.

In an embodiment, the sensor system may specifically include a first sensor system and a second sensor system;
correspondingly, acquiring the height, width, depth and type of the obstacle by means of the sensor system may include, in a specific implementation,
S1: acquiring the height of the obstacle by means of the first sensor system disposed on the robot body of the cleaning robot; and
S2: when the height of the obstacle is greater than or equal to a critical height value, acquiring the width, depth and type of the obstacle by means of the second sensor system disposed on the robotic arm of the cleaning robot.

The critical height value may be specifically related to performance parameters of the first sensor system. Generally, when the height of the obstacle is greater than or equal to the critical height value, high-precision and low-error information such as width, depth and type of the obstacle cannot be obtained by means of the first sensor system only.

Here, as shown in FIG. 2, the position and angle of the first sensor system disposed on the robot body are fixed relative to the cleaning robot.

The position and angle of the second sensor system disposed on the robotic arm may be changed within a certain range along with the movement of the robotic arm, so that complete and desired three-dimensional obstacle information can be collected flexibly for different types of obstacles under different conditions.

In a specific implementation, the height of an obstacle may first be obtained using the first sensor system disposed on the robot body; and then the height of the obstacle may be compared with the first threshold value to obtain a first comparison result.

Based on the first comparison result, when it is determined that the height of the obstacle is greater than or equal to the critical height value, it can be determined that the obstacle is higher than the cleaning robot.

In this case, the position and angle of the first sensor system are fixed relative to the cleaning robot, and the viewing range of the first sensor system is limited. In this case, the three-dimensional obstacle information collected by the first sensor system based on the current position of the cleaning robot may be incomplete or inaccurate, and there may even be detection blind spots, for example, failing to detect a partial area behind the obstacle, as shown in FIG. 6.

Thus, in this case, the cleaning robot often cannot accurately acquire the information such as width, depth and type of the obstacle by using only the first sensor system, or the acquired information is prone to errors.

In order to obtain the information of the obstacle more precisely, the cleaning robot may use the second sensor system disposed on the robotic arm to acquire information such as the width, depth and type of the obstacle.

In a specific implementation, the robotic arm may be actuated such that the obstacle lies within a detection range of the second sensor system; and three-dimensional obstacle information may be acquired by means of the second sensor system. The three-dimensional obstacle information is used for determining the width, depth and type of the obstacle.

Specifically, for example, as shown in FIG. 7, the cleaning robot can actuate and extend the robotic arm and adjust the position and angle of the second sensor system by adjusting the robotic arm, so that the obstacle can be viewed as completely as possible by means of the second sensor system, that is, bring the obstacle within the detection range of the second sensor system.

Furthermore, highly accurate information such as the width, depth and type of the obstacle can be obtained by using the advantages and characteristics of the robotic arm and the second sensor system, thereby effectively reducing data errors.

In an embodiment, the method may further include, in a specific implementation, posterior to acquiring the height of the obstacle by means of the first sensor system disposed on the robot body of the cleaning robot,
when the height of the obstacle is greater than or equal to a first threshold value, acquiring information such as the width, depth and type of the obstacle by means of the first sensor system disposed on the robot body of the cleaning robot and the second sensor system disposed on the robotic arm of the cleaning robot in combination.

Specifically, for example, the first sensor system and the second sensor system may be respectively used to acquire three-dimensional obstacle information 1 and three-dimensional obstacle information 2 corresponding to the same obstacle; the three-dimensional obstacle information 1 and the three-dimensional obstacle information 2 may be then fused to obtain relatively comprehensive fused three-dimensional obstacle information; and then the width and depth of the obstacle may be determined accurately based on the fused three-dimensional obstacle information. Moreover, the type of the obstacle may also be identified and determined accurately based on the fused three-dimensional obstacle information.

In an embodiment, the method may further include, in a specific implementation, posterior to acquiring the height of the obstacle by means of the first sensor system disposed on the robot body of the cleaning robot,
determining whether the entire obstacle is currently within the effective viewing range of the first sensor system based on the currently relative pose information (including relative position and relative angle) of the cleaning robot relative to the obstacle and the height of the obstacle; if the obstacle is within the effective viewing range of the first sensor system, continuing to acquire the height of the obstacle by means of the first sensor system disposed on the robot body of the cleaning robot; and conversely, if the obstacle is out of the effective viewing range of the first sensor system, switching to the second sensor system, and acquiring the width, depth and type of the obstacle by means of the second sensor system disposed on the robotic arm of the cleaning robot.

In an embodiment, the second sensor system is a binocular sensor system.

This is because the binocular sensor system can not only acquire the required three-dimensional obstacle information, but also has a structure matching well with the structure of the robotic arm.

Therefore, the binocular sensor system can be disposed on the robotic arm as the second sensor system, so as to better cooperate with and use the structural characteristics of the robotic arm and obtain relatively effective three-dimensional obstacle information.

In an embodiment, acquiring the width, depth and type of the obstacle by means of the second sensor system disposed on the robotic arm of the cleaning robot may include, in a specific implementation,
actuating the robotic arm such that the obstacle lies within a detection range of the second sensor system; and collecting three-dimensional obstacle information by means of the second sensor system disposed on the robotic arm. The three-dimensional obstacle information is used for determining information such as the width, depth and type of the obstacle.

In a specific implementation, the robotic arm may be actuated first; then, based on the relevant information collected by the first sensor system and/or the second sensor system, the pose (including height and/or angle) of the robotic arm may be continuously adjusted so that the second sensor system can cover the obstacle as completely as possible, and the obstacle is within the detection range of the second sensor system; and then three-dimensional obstacle information may be acquired by means of the second sensor system.

In this way, relatively complete and highly accurate three-dimensional obstacle information can be obtained by means of the second sensor system.

In a specific implementation, an obstacle detection model may be used to determine information such as the width and depth of the obstacle by processing the three-dimensional obstacle information. Information such as the width and depth of the obstacle may also be determined through corresponding data processing based on the three-dimensional obstacle information.

For example, a projection pattern of the obstacle relative to the ground may first be determined based on the three-dimensional obstacle information; and information such as the width and depth of the obstacle may then be calculated based on the projection pattern.

In this way, information such as the width and depth of the obstacle can be accurately determined based on the acquired three-dimensional obstacle information.

In a specific implementation, an obstacle detection model may be used to determine the type of the obstacle by processing the three-dimensional obstacle information. In this way, the type of the obstacle can be accurately and efficiently identified.

In an embodiment, when the height of the obstacle is greater than or equal to the first threshold value and the width and depth of the obstacle exceed the second threshold value, the method may further include, in a specific implementation,
in response to the type of the obstacle being a preset graspable obstacle type, directly controlling the robotic arm to grasp the obstacle.
where the preset graspable obstacles may specifically include light, non-fragile and inexpensive obstacles such as plastic stools, cartons and foam boxes;
in response to the type of the obstacle being a preset non-graspable obstacle type, controlling the robotic arm not to grasp the obstacle,
where the preset non-graspable obstacles may specifically include heavy, fragile and expensive obstacles such as fish tanks, sofas, and vases.

In an embodiment, the method may further include, in a specific implementation, posterior to controlling the robotic arm to grasp the obstacle,
S1: controlling the robotic arm to move and place the grasped obstacle in a first area; and
S2: performing a return cleaning operation.

In a specific implementation, the cleaning robot may first control the robotic arm to move the grasped obstacle from the area in which the obstacle is originally located and place it in the first area,
where the first area is a different area from the area in which the obstacle is originally located. Specifically, for example, the first area may be a cleaned area adjacent to the area in which the obstacle is originally located.

Next, the cleaning robot may perform a return cleaning operation to move back to the area in which the obstacle is originally located and clean this area.

After the area in which the obstacle is originally located is cleaned, the cleaning robot may move back to the first area, and control the robotic arm to grasp the obstacle; and move the grasped obstacle and place it back in the area in which the obstacle is originally located.

Based on the above embodiments, the cleaning robot may temporarily grasp the obstacle by the robotic arm and move it to the first area, thereby effectively preventing the obstacle from interfering with the cleaning on the area in which the obstacle is originally located, and achieving a good cleaning effect.

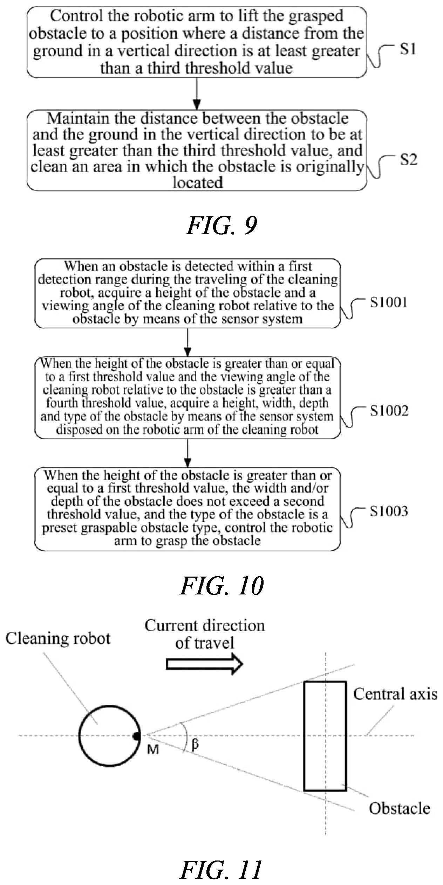

In an embodiment, as shown in FIG. 9, the method may further include, in a specific implementation, posterior to controlling the robotic arm to grasp the obstacle,
S1: controlling the robotic arm to lift the grasped obstacle to a position where a distance from the ground in a vertical direction is at least greater than a third threshold value; and
S2: maintaining the distance between the obstacle and the ground in the vertical direction to be at least greater than the third threshold value, and cleaning an area in which the obstacle is originally located.

In a specific implementation, after grasping the obstacle, the cleaning robot may not move the obstacle to the first area; instead, the cleaning robot may stay in the current area (i.e., the area in which the obstacle is originally located), and control the robotic arm to lift the grasped obstacle, such that the distance between the obstacle and the ground is at least greater than or equal to the third threshold value. The third threshold value may be specifically a distance between an upper surface of the robot body of the cleaning robot and the ground.

In this embodiment, since the obstacle is lifted by the robotic arm to a position where the distance from the ground is at least greater than or equal to the third threshold value, the cleaning robot, or the cleaning components of the cleaning robot, can smoothly enter the area in which the obstacle is originally located for cleaning.

Correspondingly, the cleaning robot may maintain, by the robotic arm, the distance between the obstacle and the ground in the vertical direction to be at least greater than the third threshold value, and then may be controlled to perform an in-situ cleaning operation. For example, the cleaning robot is controlled to enter the area in which the obstacle is originally located, and/or the cleaning components are extended into the area in which the obstacle is originally located to clean the area in which the obstacle is originally located.

After the area in which the obstacle is originally located is cleaned, the cleaning robot may control the robotic arm to place the obstacle back to the area in which the obstacle is originally located.

Based on the above embodiments, the cleaning robot may temporarily grasp and lift the obstacle by the robotic arm, thereby effectively preventing the obstacle from interfering with the cleaning on the area in which the obstacle is originally located, and achieving a good cleaning effect.

In an embodiment, while maintaining the distance between the obstacle and the ground in the vertical direction to be at least greater than the third threshold value, the method may further include, in a specific implementation,
maintaining an amplitude of displacement of the obstacle relative to the robot body of the cleaning robot in a horizontal direction to be less than a preset amplitude threshold value.

The preset amplitude threshold value may be a minimum value close to 0, for example, 0.01 cm.

In this way, it is possible to stably maintain the distance between the obstacle and the ground in the vertical direction to be at least greater than the third threshold value, so as to effectively complete cleaning of the area in which the obstacle is originally located.

In an embodiment, the method may further include, in a specific implementation,
in response to the three-dimensional obstacle information indicating that the type of the obstacle is a preset non-graspable obstacle type, adjusting a pose of the robotic arm such that at least a preset proportion of a projection of the robotic arm on the ground lies within a projection of the robot body of the cleaning robot on the ground; and performing a bypass cleaning operation.

The preset proportion threshold value may be specifically determined by a manufacturer through actual machine testing using cleaning robots of the same model.

Specifically, the preset proportion threshold value may be greater than or equal to 60%, for example, 65%, 70%, or 85%, etc.

Of course, in a specific implementation, depending on the specific configuration of the cleaning robot used, the preset proportion threshold value may also be set to be greater than or equal to 75%.

In a specific implementation, adjusting the pose of the robotic arm may include: retracting the robotic arm; or retracting the robotic arm and placing the retracted robotic arm into a robotic arm receiving recess; or adjusting the position and angle of the robotic arm such that at least the preset proportion of the projection of the robotic arm on the ground lies within the projection of the robot body of the cleaning robot on the ground.

This can prevent the robot body from tipping over during traveling or cleaning due to unstable overall center of gravity caused by the extended robotic arm; moreover, this can prevent the extended robotic arm from colliding with the obstacle during traveling and cleaning, thereby effectively ensuring the safety of the cleaning robot during traveling and cleaning.

In a specific implementation, performing the bypass cleaning operation may include: determining a cleaning path around the obstacle based on the three-dimensional obstacle information; and controlling the cleaning robot to move along the cleaning path and to perform edge-following cleaning during movement. In this way, the area surrounding the obstacle can be cleaned effectively, thereby reducing missed areas, and achieving a good cleaning effect.

In an embodiment, when the height of the obstacle is greater than or equal to the first threshold value, the method may further include, in a specific implementation,
performing a steering operation; and acquiring three-dimensional obstacle information by means of the first sensor system disposed on the robot body, where the three-dimensional obstacle information is used for determining the width, depth and type of the obstacle.

In a specific implementation, by performing the steering operation, the angle of the robot body relative to the obstacle can be adjusted to adjust the pose (e.g., angle) of the first sensor system relative to the obstacle; and three-dimensional obstacle information can then be acquired again by means of the adjusted first sensor system, so as to obtain three-dimensional obstacle information that meets requirements and that can be used for accurately determining the width, depth and type of the obstacle.

In a specific implementation, after performing the steering operation, the cleaning robot may also be controlled to perform a backward movement to adjust the pose (e.g., angle and distance) of the first sensor system relative to the obstacle; and three-dimensional obstacle information can then be acquired again by means of the adjusted first sensor system, so as to obtain three-dimensional obstacle information that meets requirements and that can be used for accurately determining the width, depth and type of the obstacle.

Based on the above embodiments, when the height of the obstacle is greater than or equal to the first threshold value, through the relevant pose adjustment, it is also possible to continue to use the first sensor system disposed on the robot body to obtain three-dimensional obstacle information that meets requirements.

As can be seen from the above, according to the cleaning robot control method and the cleaning robot provided in the present application, the sensor system is used for acquiring information such as the height, width, depth and type of obstacles, and based on the information, different types of obstacles under different conditions can be accurately distinguished; and targeted processing can be performed on different types of obstacles under different conditions by fully utilizing the advantages and characteristics of the robotic arm and the sensor system with matched processing approaches, so as to obtain relatively comprehensive and detailed three-dimensional obstacle information by using the sensor system disposed on the robotic arm. Moreover, by virtue of the robotic arm precisely and flexibly cooperating with the cleaning components, cleaning tasks can be effectively completed, so as to achieve a good cleaning effect.

In an embodiment, when the height of the obstacle is greater than or equal to the first threshold value and the width and depth of the obstacle exceed the second threshold value, the method may further include, in a specific implementation,

in response to the type of the obstacle being a preset pushable obstacle type, controlling the robotic arm to push the obstacle.

In a specific implementation, when the height of the obstacle is greater than or equal to the first threshold value, and the width and depth of the obstacle exceed the second threshold value, it can be determined that the current obstacle cannot be suctioned into the dust box through the main brush chamber, and cannot be grasped by the robotic arm.

The cleaning robot may then determine whether the type of the obstacle is a preset pushable obstacle type.

Specifically, the type of the obstacle can be matched against a preset pushable obstacle type list; if the match fails, it is determined that the type of the obstacle is a preset non-pushable obstacle type, and the obstacle is not suitable for being pushed by the robotic arm, that is, the type of the obstacle does not meet a pushing condition.

Conversely, if the match is successful, it is determined that the type of the obstacle is a preset pushable obstacle type, and the obstacle is suitable for being pushed by the robotic arm, that is, the type of the obstacle meets the pushing condition.

If the type of the obstacle is the preset pushable obstacle type, the obstacle may be actively moved by the robotic arm, so that the cleaning robot can effectively clean the area in which the obstacle is originally located, achieving a good cleaning effect.

Based on the above embodiments, when an obstacle is relatively high and cannot be grasped by the robotic arm, the obstacle may be pushed by the robotic arm, so as to prevent the obstacle from interfering with the cleaning process, and achieve a good cleaning effect.

In an embodiment, for some obstacles that are not suitable for being pushed by the robotic arm, in some scenarios, the obstacles may also be actively pushed by the structure such as the robot body or side brushes of the cleaning robot.

In an embodiment, when the height of the obstacle is greater than or equal to the first threshold value, and the width and depth of the obstacle exceed the second threshold value, in response to the type of the obstacle being the preset pushable obstacle type, the method may further include, in a specific implementation,
S1: controlling the robotic arm to push the obstacle away from an area in which the obstacle is originally located; and
S2: adjusting a pose of the robotic arm such that at least a preset proportion of a projection of the robotic arm on the ground lies within a projection of the robot body of the cleaning robot on the ground, and cleaning the area in which the obstacle is originally located.

The preset pushable obstacles may be specifically understood as light, non-fragile and inexpensive obstacles that cannot be grasped by the robotic arm but are suitable for being pushed by the robotic arm, for example, plastic pots, cat scratching boards, small potted plants, etc.

In a specific implementation, an obstacle detection model may be used to determine the type of the obstacle by processing the three-dimensional obstacle information.

In a specific implementation, in response to the type of the obstacle being a preset pushable obstacle type, the robotic arm can be controlled to extend laterally, and the laterally extended robotic arm can be used to push the obstacle away from the current area where the obstacle is located to clear that area (i.e., the original area).

After the obstacle is pushed away from the original area, the pose of the robotic arm can be adjusted such that at least a preset proportion of a projection of the robotic arm on the ground lies within a projection of the robot body of the cleaning robot on the ground, and then an in-situ cleaning operation can be performed in this area. In this way, the cleaning task for this area can be completed safely.

After completing the cleaning task for the area in which the obstacle is originally located, the cleaning robot may also control the robotic arm to move the obstacle back to its original area.

In an embodiment, when the height of the obstacle is greater than or equal to the first threshold value and the width and depth of the obstacle exceed the second threshold value, the method may further include, in a specific implementation,
in response to the type of the obstacle being a preset non-pushable obstacle type, performing a bypass cleaning operation.

The preset non-pushable obstacles may be specifically understood as heavy, fragile and expensive obstacles that cannot be grasped by the robotic arm and are not suitable for being pushed by the robotic arm, for example, antiques, statues, large flower pots, etc.

In a specific implementation, when the three-dimensional obstacle information indicates that the type of the obstacle is a preset non-pushable obstacle type, an edge-following cleaning path around the obstacle can be replanned; a bypass cleaning operation can then be performed along the edge-following cleaning path, thereby effectively cleaning the area surrounding the obstacle.

In an embodiment, when the height of the obstacle is less than the first threshold value, in response to the type of the obstacle being a preset suctionable obstacle type, the cleaning robot moves in a current direction of travel, and suctions the obstacle through a main brush chamber.

Based on the above embodiment, for a low-height obstacle, when it is determined that the type of the obstacle is the preset suctionable obstacle type, the obstacle can be directly suctioned in through the main brush chamber, without additional time and energy consumption to actuate the robotic arm, thereby completing the relevant cleaning effectively.

In a specific implementation, when the height of the obstacle is less than the first threshold value, it can be determined that the obstacle is one that can be suctioned into the dust box through the main brush chamber.

In a specific implementation, an obstacle detection model may be used to determine the type of the obstacle by processing the three-dimensional obstacle information; and when it is determined that the type of the obstacle is the preset suctionable obstacle type, the cleaning robot may continue to move in the current direction of travel, and directly suction the obstacle into the space under the robot body through the main brush chamber.

The preset suctionable obstacles may be specifically understood as obstacles that can be suctioned into the dust box through the main brush chamber without affecting the normal operation of the cleaning robot, such as paper scraps, dust, short hair, etc.

Conversely, there are also preset non-suctionable obstacles, which may be specifically understood as obstacles that cannot be suctioned into the dust box through the main brush chamber, or obstacles that can be suctioned into the dust box through the main brush chamber but affecting the normal operation of the cleaning robot, such as long hair, plastic bags, shoelaces, and other objects that easily become entangled with the main brush and thus interfere with the normal operation of the cleaning robot.

In an embodiment, when the height of the obstacle is less than the first threshold value, three-dimensional obstacle information may first be obtained; a dimensional parameter of the obstacle may be obtained based on the three-dimensional obstacle information; and the dimensional parameter of the obstacle may then be compared with a fifth threshold value. The fifth threshold value is determined based on dimensional parameters of the main brush chamber and the dust box.

If the dimensional parameter of the obstacle is greater than the fifth threshold value, it can be determined that the obstacle cannot be suctioned into the dust box through the main brush chamber, that is, the obstacle is a preset non-suctionable obstacle. If the dimensional parameter of the obstacle is less than or equal to the fifth threshold value, it can be determined that the obstacle can be suctioned into the dust box through the main brush chamber, that is, the obstacle is a preset suctionable obstacle.

Based on the above embodiments, preset suctionable obstacles and the preset non-suctionable obstacles can be distinguished and identified relatively precisely and accurately.

In an embodiment, the method may further include, in a specific implementation,
in response to the type of the obstacle being a preset non-suctionable obstacle type, performing a bypass cleaning operation.

In a specific implementation, the cleaning path may be re-planned based on the three-dimensional obstacle information; and the cleaning robot may then perform a bypass cleaning operation based on this re-planned cleaning path.

In an embodiment, in response to the type of the obstacle being the preset non-suctionable obstacle type, the method may further include, in a specific implementation,
S1: controlling the robotic arm to push the obstacle away from an area in which the obstacle is originally located; and
S2: adjusting a pose of the robotic arm such that at least a preset proportion of a projection of the robotic arm on the ground lies within a projection of the robot body of the cleaning robot on the ground, and cleaning the area in which the obstacle is originally located.

Based on the above embodiments, the cleaning robot can be precisely controlled to safely complete the corresponding cleaning tasks, effectively preventing the robot body from tipping over or colliding with the obstacle during traveling or cleaning.

As can be seen from the above, according to the cleaning robot control method and the cleaning robot provided in the present application, by acquiring and using information such as the height, width, depth and type of obstacles, different types of obstacles under different conditions can be accurately distinguished; and targeted processing can be performed on different types of obstacles by fully utilizing the advantages and characteristics of the robotic arm and the sensor system with matched processing approaches, so as to obtain relatively comprehensive and detailed three-dimensional obstacle information by using the sensor system disposed on the robotic arm. Alternatively, by virtue of the robotic arm cooperating with the cleaning components, cleaning tasks can be effectively completed, so as to achieve a good cleaning effect.

Referring to FIG. 10, an embodiment of the present application further provides a cleaning robot control method for use in a cleaning robot provided with a sensor system capable of acquiring three-dimensional obstacle information, and a robotic arm. The method may include, in a specific implementation,
S1001: when an obstacle is detected within a first detection range during the traveling of the cleaning robot, acquiring a height of the obstacle and a viewing angle of the cleaning robot relative to the obstacle by means of the sensor system;
S1002: when the height of the obstacle is greater than or equal to a first threshold value and the viewing angle of the cleaning robot relative to the obstacle is greater than a fourth threshold value, acquiring a height, width, depth and type of the obstacle by means of the sensor system disposed on the robotic arm of the cleaning robot; and
S1003: when the height of the obstacle is greater than or equal to the first threshold value, the width and/or depth of the obstacle does not exceed a second threshold value, and the type of the obstacle is a preset graspable obstacle type, controlling the robotic arm to grasp the obstacle, where the first threshold value is an upper limit value of a distance between a lower surface of a robot body of the cleaning robot and a ground, and the second threshold value is an upper limit value of a grasping range of a grasping portion of the robotic arm.

The fourth threshold value may be specifically understood as an effective detection range of the sensor system based on an angle of view. Specifically, the angle of view may refer to an included angle formed by two edges of the maximum range through which the object image of the measured target can pass through a lens in the sensor system, with the lens as the vertex. This angle determines the field of view range of the sensor system. Generally, the larger angle of view provides the wider field of view.

Specifically, the fourth threshold value may be determined based on performance parameters such as the field of view range of sensors in the sensor system.

In an embodiment, referring to FIG. 11, the viewing angle of the cleaning robot relative to the obstacle is an included angle formed by tangents to an outer peripheral boundary of the obstacle from a first reference point of the cleaning robot.

In this embodiment, the first reference point is a point of points of intersection of a boundary of the robot body of the cleaning robot and a central axis of the cleaning robot that is close to the obstacle in the current direction of travel, and the central axis of the cleaning robot is parallel to the current direction of travel of the cleaning robot.

Specifically, the viewing angle may be specifically understood as an angle formed by tangents to the outer peripheral boundary of the obstacle from the first reference point (e.g., point M) on the robot body of the cleaning robot, and may be denoted by β.

In a specific implementation, when an obstacle is detected within a first detection range during the traveling of the cleaning robot, a height of the obstacle and a viewing angle of the cleaning robot relative to the obstacle may be acquired first by means of the sensor system disposed on the robot body (referred to as a first sensor system). The viewing angle thus obtained may be specifically a viewing angle based on the first sensor system.

In a specific implementation, when the height of the obstacle is greater than or equal to the first threshold value and the viewing angle of the cleaning robot relative to the obstacle is greater than the fourth threshold value, it can be determined that the obstacle is high, and cannot be suctioned directly into the dust box through the main brush chamber, and that the obstacle has a relatively large size, and its current position relative to the cleaning robot has exceeded the effective detection range of the sensor system, that is, complete three-dimensional obstacle information cannot be accurately and comprehensively obtained based on the first sensor system.

In this case, in order to accurately obtain the relatively complete three-dimensional obstacle information, the sensor system disposed on the robotic arm (referred to as a second sensor system) can be used for acquiring the three-dimensional obstacle information.

Specifically, the robotic arm may be actuated; the position and/or angle of the second sensor system disposed on the robotic arm relative to the obstacle may be adjusted by adjusting the pose of the robotic arm, so as to bring the obstacle as completely as possible within the effective detection range of the second sensor system; and the adjusted second sensor system may then be controlled to acquire the three-dimensional obstacle information. In this way, the accurate and complete three-dimensional obstacle information can be obtained.

Conversely, when the height of the obstacle is greater than or equal to the first threshold value, and the viewing angle of the cleaning robot relative to the obstacle is less than or equal to the fourth threshold value, the first sensor system disposed on the robot body may continue to be used to acquire three-dimensional obstacle information, without additional actuation of the robotic arm. Thus, unnecessary energy consumption can be reduced.

Based on the above embodiments, by fully utilizing the advantages and characteristics of the robotic arm, the relatively complete and accurate information such as height, width, depth and type of the obstacle can be obtained by means of the second sensor system disposed on the robotic arm, and different types of obstacles under different conditions can be accurately distinguished based on the information; and targeted processing can then be performed on different types of obstacles under different conditions by fully utilizing the advantages and characteristics of the robotic arm and the sensor system with matched processing approaches, so as to obtain relatively comprehensive and detailed obstacle information. Moreover, by precisely and flexibly cooperating with cleaning components, cleaning tasks can be effectively completed, so as to achieve a good cleaning effect.

In an embodiment, when the viewing angle includes a horizontal viewing angle, the fourth threshold value includes a horizontal angle-of-view threshold value; and
when the viewing angle includes a vertical viewing angle, the fourth threshold value includes a vertical angle-of-view threshold value; and when the viewing angle includes both a horizontal viewing angle and a vertical viewing angle, the fourth threshold value includes a horizontal angle-of-view threshold value and a vertical angle-of-view threshold value.

Specifically, when the viewing angle includes a vertical viewing angle, the fourth threshold value includes a vertical angle-of-view threshold value of the sensor system.

The vertical viewing angle may be specifically understood as a viewing angle in the vertical direction, and the vertical angle-of-view threshold value may be specifically understood as an angle-of-view threshold value in the vertical direction.

Correspondingly, in a specific implementation, when the height of the obstacle is greater than or equal to the first threshold value, and the vertical viewing angle of the cleaning robot relative to the obstacle is greater than the corresponding vertical angle-of-view threshold value, it can be determined that the current obstacle is relatively high, and the three-dimensional obstacle information collected by the first sensor system only is incomplete. For example, only partial height information of the obstacle can be acquired by the first sensor system, and the remaining height information cannot be completely and accurately collected by the first sensor system, as it has exceeded the vertical viewing angle. In this case, the height, width, depth and type of the obstacle may be acquired by means of the sensor system disposed on the robotic arm of the cleaning robot, so as to obtain relatively complete and accurate obstacle information.

Conversely, when the height of the obstacle is greater than or equal to the first threshold value, and the vertical viewing angle of the cleaning robot relative to the obstacle is less than or equal to the corresponding vertical angle-of-view threshold value, the sensor system disposed on the robot body of the cleaning robot may continue to be used to acquire the three-dimensional obstacle information, so as to obtain the height, width, depth and type of the obstacle.

Specifically, the manufacturer can conduct actual machine testing on sample cleaning robots in advance, and determine the vertical and horizontal angle-of-view threshold values for the cleaning robot of this model based on the data collected from the actual machine testing.

Specifically, the vertical angle-of-view threshold value may be an angle value greater than or equal to 40 degrees and less than or equal to 60 degrees. For example, the vertical angle-of-view threshold value may be 45 degrees or 50 degrees, etc.

The horizontal angle-of-view threshold value may be an angle value greater than or equal to 120 degrees and less than or equal to 140 degrees. For example, the horizontal angle-of-view threshold value may be 125 degrees or 130 degrees, etc.

Of course, it should be noted that the vertical and horizontal angle-of-view threshold values listed above are for illustrative purposes only. In a specific implementation, depending on the specific model of the cleaning robot and the specific sensor system used, etc., the vertical and horizontal angle-of-view threshold values may also be set to other appropriate values.

Specifically, when the viewing angle includes a horizontal viewing angle, the fourth preset detection threshold value includes a horizontal angle-of-view threshold value of the sensor system.

The horizontal viewing angle may be specifically understood as a viewing angle in the horizontal direction, and the horizontal angle-of-view threshold value may be specifically understood as an angle-of-view threshold value in the horizontal direction.

Correspondingly, in a specific implementation, when the height of the obstacle is greater than or equal to the first threshold value, and the horizontal viewing angle of the cleaning robot relative to the obstacle is greater than the corresponding horizontal angle-of-view threshold value, it can be determined that the current obstacle is relatively wide, and the three-dimensional obstacle information collected by the first sensor system only is incomplete. For example, only partial width information of the obstacle can be acquired by the first sensor system, and the remaining width information cannot be completely and accurately collected by the first sensor system, as it has exceeded the horizontal viewing angle. In this case, the height, width, depth and type of the obstacle may be acquired by means of the sensor system disposed on the robotic arm of the cleaning robot, so as to obtain relatively complete and accurate three-dimensional obstacle information.

Conversely, when the height of the obstacle is greater than or equal to the first threshold value, and the horizontal viewing angle of the cleaning robot relative to the obstacle is less than the corresponding horizontal angle-of-view threshold value, the sensor system disposed on the robot body of the cleaning robot may continue to be used to acquire the three-dimensional obstacle information, so as to obtain the height, width, depth and type of the obstacle.

Specifically, when the viewing angle includes both a horizontal viewing angle and a vertical viewing angle, the fourth preset detection threshold value includes a horizontal angle-of-view threshold value and a vertical angle-of-view threshold value of the sensor system.

Correspondingly, in a specific implementation, when the height of the obstacle is greater than or equal to the first threshold value, the vertical viewing angle of the cleaning robot relative to the obstacle is greater than the corresponding vertical angle-of-view threshold value, and the horizontal viewing angle is greater than the corresponding horizontal angle-of-view threshold value, information such as the height, width, depth and type of the obstacle may be acquired by means of the sensor system disposed on the robotic arm of the cleaning robot, so as to obtain relatively complete and accurate three-dimensional obstacle information.

Conversely, when the height of the obstacle is greater than or equal to the first threshold value, the vertical viewing angle of the cleaning robot relative to the obstacle is less than the corresponding vertical angle-of-view threshold value, and/or the horizontal viewing angle is less than the corresponding horizontal angle-of-view threshold value, the sensor system disposed on the robot body of the cleaning robot may continue to be used to acquire three-dimensional obstacle information, so as to obtain the height, width, depth and type of the obstacle.

In an embodiment, the method may further include, in a specific implementation, posterior to controlling the robotic arm to grasp the obstacle, controlling the robotic arm to move and place the grasped obstacle in a first area; and performing a return cleaning operation.

In an embodiment, the method may further include, in a specific implementation, in response to the three-dimensional obstacle information indicating that the type of the obstacle is a preset non-graspable obstacle type, adjusting a pose of the robotic arm such that at least a preset proportion of a projection of the robotic arm on the ground lies within a projection of the robot body of the cleaning robot on the ground; and performing a bypass cleaning operation.

In an embodiment, after the three-dimensional obstacle information is obtained, the type of the obstacle may be determined based on the three-dimensional obstacle information; a matched processing strategy may then be determined based on the type of obstacle; and the robotic arm may then be controlled to perform corresponding processing according to the matched processing strategy to better complete the cleaning tasks.

In an embodiment, the sensor system may specifically include one or more of a monocular vision sensor, a binocular vision sensor, a line laser sensor, an area laser sensor, an LDS sensor, a Dtof sensor, an Itof sensor, etc.

As can be seen from the above, according to the cleaning robot control method and the cleaning robot provided in the present application, by acquiring and using the height of the obstacle and the viewing angle of the obstacle relative to the cleaning robot, it is possible to intelligently and accurately determine whether complete three-dimensional obstacle information can currently be accurately obtained by means of the first sensor system disposed on the robot body of the cleaning robot. When it is determined that complete three-dimensional obstacle information cannot currently be accurately obtained by means of the first sensor system disposed on the robot body of the cleaning robot, the structural advantages of the robotic arm can be fully utilized, the robotic arm can be actuated and complete three-dimensional obstacle information can be accurately obtained by means of the second sensor system disposed on the robotic arm. Conversely, when it is determined that complete three-dimensional obstacle information can currently be accurately obtained by means of the first sensor system disposed on the robot body of the cleaning robot, the robotic arm need not be actuated, and the first sensor system disposed on the robot body may continue to be used to acquire three-dimensional obstacle information, thereby reducing unnecessary energy consumption and improving the overall cleaning efficiency. Furthermore, the condition and type of the obstacle can be accurately determined based on the obtained relatively accurate three-dimensional obstacle information; and targeted processing can then be performed on different types of obstacles under different conditions by fully utilizing the advantages and characteristics of the robotic arm and the sensor system with matched processing approaches, so as to obtain relatively comprehensive and detailed obstacle information. Moreover, by precisely and flexibly cooperating with cleaning components, cleaning tasks can be effectively completed, so as to achieve a good cleaning effect.

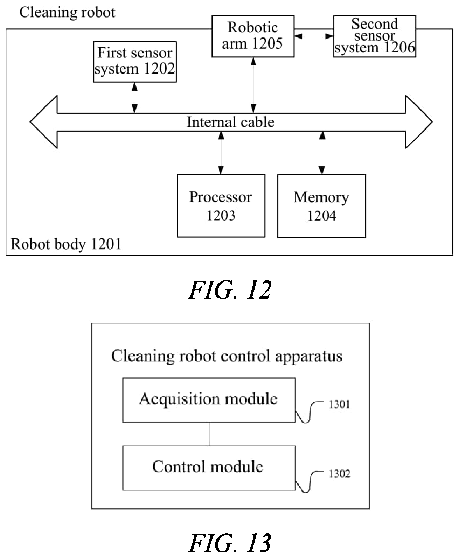

As shown in FIG. 12, an embodiment of the present application further provides a cleaning robot. The cleaning robot includes:
a robot body 1201, a first sensor system 1202 disposed on the robot body 1201 and capable of acquiring three-dimensional obstacle information, a processor 1203, and a memory 1204 for storing processor-executable instructions. The robot body is provided with a robotic arm 1205, and the robotic arm 1205 is further provided with a second sensor system 1206 capable of acquiring three-dimensional obstacle information.

During the traveling of the cleaning robot, the processor 1203 may implement relevant steps of the cleaning robot movement control method by executing the relevant instructions in the memory 1204 to enable the sensor system 1202 to effectively acquire three-dimensional obstacle information that meets requirements.

In a specific implementation, the processor 1203 is configured to, when an obstacle is detected during the traveling of the cleaning robot, acquire a height, width, depth and type of the obstacle by means of the sensor system; and when the height of the obstacle is greater than or equal to a first threshold value, the width and/or depth of the obstacle does not exceed a second threshold value, and the type of the obstacle is a preset graspable obstacle type, control the robotic arm to grasp the obstacle, where the first threshold value is an upper limit value of a distance between a lower surface of a robot body of the cleaning robot and a ground, and the second threshold value is an upper limit value of a grasping range of a grasping portion of the robotic arm.

In a specific implementation, the processor 1203 is configured to, when an obstacle is detected during the traveling of the cleaning robot, acquire a height, width, depth and type of the obstacle by means of the sensor system; and when the height of the obstacle is greater than or equal to a first threshold value, the width and depth of the obstacle exceed a second threshold value, and the type of the obstacle is a preset pushable obstacle type, control the robotic arm to push the obstacle, where the first threshold value is an upper limit value of a distance between a lower surface of a robot body of the cleaning robot and a ground, and the second threshold value is an upper limit value of a grasping range of a grasping portion of the robotic arm.

In a specific implementation, the processor 1203 is configured to, when an obstacle is detected during the traveling of the cleaning robot, acquire a height, width, depth and type of the obstacle by means of the sensor system; and when the height of the obstacle is less than the first threshold value and the type of the obstacle is a preset suctionable obstacle type, control the cleaning robot to move in a current direction of travel; and suction the obstacle through a main brush chamber, where the first threshold value is an upper limit value of a distance between a lower surface of the robot body of the cleaning robot and a ground.

In a specific implementation, the processor 1203 is configured to, when an obstacle is detected during the traveling of the cleaning robot, acquire a height of the obstacle and a viewing angle of the cleaning robot relative to the obstacle by means of the sensor system; when the height of the obstacle is greater than or equal to a first threshold value and the viewing angle of the cleaning robot relative to the obstacle is greater than a fourth threshold value, acquire a height, width, depth and type of the obstacle by means of the sensor system disposed on the robotic arm of the cleaning robot; and when the height of the obstacle is greater than or equal to the first threshold value, the width and/or depth of the obstacle does not exceed a second threshold value, and the type of the obstacle is a preset graspable obstacle type, control the robotic arm to grasp the obstacle, where the first threshold value is an upper limit value of a distance between a lower surface of a robot body of the cleaning robot and a ground, and the second threshold value is an upper limit value of a grasping range of a grasping portion of the robotic arm.

In this embodiment, the processor 1203 may be implemented in any suitable manner. For example, the processor may take the form of a microprocessor or processor, a computer-readable medium storing computer-readable program codes (e.g., software or firmware) executable by the (micro)processor, logic gates, switches, an application specific integrated circuit (ASIC), a programmable logic controller, an embedded microcontroller, etc. The present application is not limited thereto.

In this embodiment, the memory 1204 may include multiple levels. In a digital system, any component capable of storing binary data may act as a memory. In an integrated circuit, a circuit with a storage function and without a physical form is also referred to as a memory, such as RAM, FIFO, etc. In a system, a storage device with a physical form is also referred to as memory, such as a memory stick, a TF card, etc.

An embodiment of the present application further provides a computer-readable storage medium based on the cleaning robot control method as described above, where the computer-readable storage medium stores computer program instructions which, when executed, cause the following steps to be implemented: when an obstacle is detected during the traveling of the cleaning robot, acquiring a height, width, depth and type of the obstacle by means of a sensor system; and when the height of the obstacle is greater than or equal to a first threshold value, the width and/or depth of the obstacle does not exceed a second threshold value, and the type of the obstacle is a preset graspable obstacle type, controlling the robotic arm to grasp the obstacle, where the first threshold value is an upper limit value of a distance between a lower surface of a robot body of the cleaning robot and a ground, and the second threshold value is an upper limit value of a grasping range of a grasping portion of the robotic arm.

An embodiment of the present application further provides another computer-readable storage medium based on the cleaning robot control method as described above, where the computer-readable storage medium stores computer program instructions which, when executed, cause the following steps to be implemented: when an obstacle is detected during the traveling of the cleaning robot, acquiring a height of the obstacle and a viewing angle of the cleaning robot relative to the obstacle by means of the sensor system; when the height of the obstacle is greater than or equal to a first threshold value and the viewing angle of the cleaning robot relative to the obstacle is greater than a fourth threshold value, acquiring a height, width, depth and type of the obstacle by means of the sensor system disposed on the robotic arm of the cleaning robot; and when the height of the obstacle is greater than or equal to the first threshold value, the width and/or depth of the obstacle does not exceed a second threshold value, and the type of the obstacle is a preset graspable obstacle type, controlling the robotic arm to grasp the obstacle, where the first threshold value is an upper limit value of a distance between a lower surface of a robot body of the cleaning robot and a ground, and the second threshold value is an upper limit value of a grasping range of a grasping portion of the robotic arm.

In this embodiment, the storage medium described above includes, but is not limited to, a random access memory (RAM), a read-only memory (ROM), cache, a hard disk drive (HDD), or a memory card. The memory may be configured to store computer program instructions. A network communication unit may be an interface configured in accordance with standards specified by a communication protocol for performing network connection and communication.

In this embodiment, the functions and effects specifically implemented by the program instructions stored in the computer-readable storage medium may be interpreted with reference to other embodiments and will not be described in detail here.

An embodiment of the present application further provides a computer program product, including at least a computer program which, when executed by a processor, causes relevant steps of the cleaning robot movement control method to be implemented.

An embodiment of the present application further provides a cleaning robot control apparatus for use in a cleaning robot provided with a robotic arm and a sensor system capable of acquiring three-dimensional obstacle information. As shown in FIG. 13, the apparatus may specifically include:
an acquisition module 1301 specifically configured to, when an obstacle is detected during the traveling of the cleaning robot, acquire a height, width, depth and type of the obstacle by means of the sensor system; and
a control module 1302 specifically configured to, when the height of the obstacle is greater than or equal to a first threshold value, the width and/or depth of the obstacle does not exceed a second threshold value, and the type of the obstacle is a preset graspable obstacle type, control the robotic arm to grasp the obstacle, where the first threshold value is an upper limit value of a distance between a lower surface of a robot body of the cleaning robot and a ground, and the second threshold value is an upper limit value of a grasping range of a grasping portion of the robotic arm.

In an embodiment, the sensor system may specifically include a first sensor system and a second sensor system.

Correspondingly, the acquisition module 1301 is configured to, in a specific implementation, acquire the height, width, depth and type of the obstacle by means of the sensor system by: acquiring the height of the obstacle by means of the first sensor system disposed on the robot body of the cleaning robot; and when the height of the obstacle is greater than or equal to a critical height value, acquiring the width, depth and type of the obstacle by means of the second sensor system disposed on the robotic arm of the cleaning robot.

In an embodiment, the second sensor system may be specifically a binocular sensor system.

In an embodiment, the acquisition module 1301 is configured to, in a specific implementation, acquire the width, depth and type of the obstacle by means of the second sensor system disposed on the robotic arm of the cleaning robot by: actuating the robotic arm such that the obstacle lies within a detection range of the second sensor system; and acquiring three-dimensional obstacle information by means of the second sensor system, where the three-dimensional obstacle information is used for determining the width, depth and type of the obstacle.

In an embodiment, the apparatus may further be configured to, in a specific implementation, posterior to controlling the robotic arm to grasp the obstacle, control the robotic arm to move and place the grasped obstacle in a first area; and perform a return cleaning operation.

In an embodiment, the apparatus may further be configured to, in a specific implementation, posterior to controlling the robotic arm to grasp the obstacle, control the robotic arm to lift the grasped obstacle to a position where a distance from the ground in a vertical direction is at least greater than a third threshold value; and maintain the distance between the obstacle and the ground in the vertical direction to be at least greater than the third threshold value, and clean an area in which the obstacle is originally located.

In an embodiment, while maintaining the distance between the obstacle and the ground in the vertical direction to be at least greater than the third threshold value, the apparatus may further be configured to, in a specific implementation, maintaining an amplitude of displacement of the obstacle relative to the robot body of the cleaning robot in a horizontal direction to be less than a preset amplitude threshold value.

In an embodiment, the apparatus may further be configured to, in a specific implementation, in response to the type of the obstacle being a preset non-graspable obstacle type, adjust a pose of the robotic arm such that at least a preset proportion of a projection of the robotic arm on the ground lies within a projection of the robot body of the cleaning robot on the ground; and perform a bypass cleaning operation.

In an embodiment, when the height of the obstacle is greater than or equal to the first threshold value, the apparatus may further be configured to, in a specific implementation, perform a steering operation; and acquire three-dimensional obstacle information by means of the first sensor system disposed on the robot body, where the three-dimensional obstacle information is used for determining the width, depth and type of the obstacle.

In an embodiment, when the height of the obstacle is greater than or equal to the first threshold value and the width and depth of the obstacle exceed the second threshold value, the apparatus may further be configured to, in a specific implementation, in response to the type of the obstacle being a preset pushable obstacle type, control the robotic arm to push the obstacle.

In an embodiment, when the height of the obstacle is greater than or equal to the first threshold value, and the width and depth of the obstacle exceed the second threshold value, in response to the type of the obstacle being the preset pushable obstacle type, the apparatus may further be configured to, in a specific implementation, control the robotic arm to push the obstacle away from an area in which the obstacle is originally located; and adjust a pose of the robotic arm such that at least a preset proportion of a projection of the robotic arm on the ground lies within a projection of the robot body of the cleaning robot on the ground, and cleaning the area in which the obstacle is originally located.

In an embodiment, when the height of the obstacle is greater than or equal to the first threshold value and the width and depth of the obstacle exceed the second threshold value, the apparatus may further be configured to, in a specific implementation, in response to the type of the obstacle being a preset non-pushable obstacle type, perform a bypass cleaning operation.

In an embodiment, the apparatus may further be configured to, in a specific implementation, when the height of the obstacle is less than the first threshold value, in response to the type of the obstacle being a preset suctionable obstacle type, control the cleaning robot to move in a current direction of travel; and suction the obstacle through a main brush chamber.

In an embodiment, the apparatus may further be configured to, in a specific implementation, in response to the type of the obstacle being a preset non-suctionable obstacle type, perform a bypass cleaning operation.

In an embodiment, in response to the type of the obstacle being the preset non-suctionable obstacle type, the apparatus may further be configured to, in a specific implementation, control the robotic arm to push the obstacle away from an area in which the obstacle is originally located; and adjust a pose of the robotic arm such that at least a preset proportion of a projection of the robotic arm on the ground lies within a projection of the robot body of the cleaning robot on the ground, and cleaning the area in which the obstacle is originally located.

An embodiment of the present application further provides a cleaning robot control apparatus for use in a cleaning robot provided with a robotic arm and a sensor system capable of acquiring three-dimensional obstacle information. The cleaning robot control device includes:
an acquisition module configured to, when an obstacle is detected during the traveling of the cleaning robot, acquire a height of the obstacle and a viewing angle of the cleaning robot relative to the obstacle by means of the sensor system; and
a control module configured to, when the height of the obstacle is greater than or equal to a first threshold value and the viewing angle of the cleaning robot relative to the obstacle is greater than a fourth threshold value, acquire a height, width, depth and type of the obstacle by means of the sensor system disposed on the robotic arm of the cleaning robot; and when the height of the obstacle is greater than or equal to the first threshold value, the width and/or depth of the obstacle does not exceed a second threshold value, and the type of the obstacle is a preset graspable obstacle type, control the robotic arm to grasp the obstacle, where the first threshold value is an upper limit value of a distance between a lower surface of a robot body of the cleaning robot and a ground, and the second threshold value is an upper limit value of a grasping range of a grasping portion of the robotic arm.

In an embodiment, the sensor system includes a first sensor system disposed on the robot body of the cleaning robot and a second sensor system disposed on the robotic arm.

In an embodiment, the apparatus may further be configured to, in a specific implementation, posterior to controlling the robotic arm to grasp the obstacle, control the robotic arm to move and place the grasped obstacle in a first area; and perform a return cleaning operation.

In an embodiment, the apparatus may further be configured to, in a specific implementation, in response to the type of the obstacle being a preset non-graspable obstacle type, adjust a pose of the robotic arm such that at least a preset proportion of a projection of the robotic arm on the ground lies within a projection of the robot body of the cleaning robot on the ground; and perform a bypass cleaning operation.

In an embodiment, the viewing angle of the cleaning robot relative to the obstacle is an included angle formed by tangents to an outer peripheral boundary of the obstacle from a first reference point of the cleaning robot;
where the first reference point is a point of points of intersection of a boundary of the robot body of the cleaning robot and a central axis of the cleaning robot that is close to the obstacle in a current direction of travel, and the central axis of the cleaning robot is parallel to the current direction of travel of the cleaning robot.

In an embodiment, when the viewing angle includes a horizontal viewing angle, the fourth threshold value includes a horizontal angle-of-view threshold value; and
when the viewing angle includes a vertical viewing angle, the fourth threshold value includes a vertical angle-of-view threshold value; and when the viewing angle includes both a horizontal viewing angle and a vertical viewing angle, the fourth threshold value includes a horizontal angle-of-view threshold value and a vertical angle-of-view threshold value.

It should be noted that the units, apparatuses, or modules described in the above embodiments may be specifically implemented by computer chips or physical entities, or by products having certain functions. For the convenience of description, the above apparatuses are described separately as various modules based on their functions. Of course, in the implementations of the present application, the functions of the modules may be implemented in one or more pieces of software and/or hardware, or a module configured to implement the same function may be implemented by a combination of a plurality of sub-modules or sub-units, etc. The apparatus embodiments described above are merely illustrative. For example, the division of units is merely logical functional division and may be other division during actual implementation. For example, a plurality of units or components may be combined or integrated into another system, or some features may be omitted or not performed. In addition, the shown or discussed mutual coupling, direct coupling, or communication connection may be indirect coupling or communication connection between apparatuses or units through some interfaces, which may be implemented in electrical, mechanical, or other forms.

As can be seen from the above, based on the cleaning robot control apparatus provided in the embodiments of the present application, by acquiring and using information such as the height, width, depth and type of obstacles, different types of obstacles under different conditions can be accurately distinguished; and targeted processing can be performed on different types of obstacles under different conditions by fully utilizing the advantages and characteristics of the robotic arm and the sensor system with matched processing approaches, so as to obtain relatively comprehensive and detailed three-dimensional obstacle information. Moreover, by flexibly cooperating with cleaning components, cleaning tasks can be effectively completed, so as to achieve a good cleaning effect.

Although the present application provides method operation steps as described in the embodiments or flowcharts, more or fewer operation steps may be included based on the conventional or non-inventive means. The sequence of steps listed in the embodiments is merely one of many possible execution sequences and does not represent the only execution sequence. When implemented in actual apparatuses or client-side products, the steps may be executed in the sequence shown in the embodiments or the figures, or may be executed in parallel (e.g., in environments with parallel processors or multithreaded processing, or even in distributed data processing environments). The terms "include", "comprise", or any other variants thereof are intended to cover non-exclusive inclusion, so that a process, method, product, or device that includes a series of elements not only includes those elements but also includes other elements not specifically listed, or elements inherent to such a process, method, product, or device. Without further limitations, it does not preclude the presence of additional identical or equivalent elements in the process, method, product, or device that includes the described elements. The terms such as "first", "second", etc. are used for designation and do not indicate any particular order.

Those skilled in the art also know that, in addition to implementing the controller in the form of pure computer-readable program code, the controller may alternatively be implemented to achieve the same functionality by logically programming the method steps in the form of logic gates, switches, application specific integrated circuits, programmable logic controllers, and embedded microcontrollers, etc. Therefore, the controller may be regarded as a hardware component, and means included therein for implementing various functions may also be regarded as structures within the hardware component. Alternatively, the means for implementing various functions may be regarded as both software modules for implementing the method and structures within the hardware component.

The present application may be described in the general context of computerexecutable instructions executed by a computer, such as program modules. Generally, the program modules include routines, programs, objects, components, data structures, classes, and the like that perform specific tasks or implement specific abstract data types. The present application may also be implemented in distributed computing environments, in which tasks are performed by remote processing devices connected via a communication network. In the distributed computing environments, the program modules may be located in both local and remote computer-readable storage media including storage devices.

From the above description of the embodiments, those skilled in the art can clearly understand that the present application may be implemented by means of software in conjunction with a necessary general-purpose hardware platform. Based on such understanding, the technical solutions of the present application may essentially be embodied as a software product. This computer software product may be stored in a storage medium, such as ROM/RAM, a magnetic disk, an optical disk, etc., and includes a plurality of instructions for causing a computer device (which may be a personal computer, a mobile terminal, a server, or a network device, etc.) to perform the methods described in the embodiments or in some parts of the embodiments of the present application.

The embodiments in the present application are described in a progressive manner, and identical or similar parts across the embodiments may be referred to each other, and each embodiment focuses on its differences from other embodiments. The present application can be applied in numerous general-purpose or specialpurpose computer system environments or configurations. For example: personal computers, server computers, handheld or portable devices, tablet devices, multiprocessor systems, microprocessor-based systems, set-top boxes, programmable electronic devices, network PCs, minicomputers, mainframe computers, and distributed computing environments including any of the above systems or devices.

Although the present application has been described with reference to the embodiments, those skilled in the art will appreciate that the present application is susceptible to various variations and modifications without departing from the spirit of the present application, and it is intended that the appended claims cover these variations and modifications without departing from the spirit of the present application.

## Claims

1. A cleaning robot control method for use in a cleaning robot provided with a robotic arm and a sensor system capable of acquiring three-dimensional obstacle information, **characterized by** comprising:
when an obstacle is detected during the traveling of the cleaning robot, acquiring a height, width, depth and type of the obstacle by means of the sensor system; and
when the height of the obstacle is greater than or equal to a first threshold value, the width and/or depth of the obstacle does not exceed a second threshold value, and the type of the obstacle is a preset graspable obstacle type, controlling the robotic arm to grasp the obstacle, wherein the first threshold value is an upper limit value of a distance between a lower surface of a robot body of the cleaning robot and a ground, and the second threshold value is an upper limit value of a grasping range of a grasping portion of the robotic arm.

2. The method according to claim 1, **characterized in that** the sensor system comprises a first sensor system and a second sensor system;
correspondingly, acquiring the height, width, depth and type of the obstacle by means of the sensor system comprises:
acquiring the height of the obstacle by means of the first sensor system disposed on the robot body of the cleaning robot; and
when the height of the obstacle is greater than or equal to a critical height value, acquiring the width, depth and type of the obstacle by means of the second sensor system disposed on the robotic arm of the cleaning robot.

3. The method according to claim 2, **characterized in that** the second sensor system is a binocular sensor system.

4. The method according to claim 2, **characterized in that** acquiring the width, depth and type of the obstacle by means of the second sensor system disposed on the robotic arm of the cleaning robot comprises:
actuating the robotic arm such that the obstacle lies within a detection range of the second sensor system; and acquiring three-dimensional obstacle information by means of the second sensor system, wherein the three-dimensional obstacle information is used for determining the width, depth and type of the obstacle.

5. The method according to claim 4, **characterized by** further comprising, posterior to controlling the robotic arm to grasp the obstacle,
controlling the robotic arm to move and place the grasped obstacle in a first area; and
performing a return cleaning operation.

6. The method according to claim 5, **characterized by** further comprising, posterior to controlling the robotic arm to grasp the obstacle,
controlling the robotic arm to lift the grasped obstacle to a position where a distance from the ground in a vertical direction is at least greater than a third threshold value; and
maintaining the distance between the obstacle and the ground in the vertical direction to be at least greater than the third threshold value, and cleaning an area in which the obstacle is originally located.

7. The method according to claim 6, **characterized in that** while maintaining the distance between the obstacle and the ground in the vertical direction to be at least greater than the third threshold value, the method further comprises:
maintaining an amplitude of displacement of the obstacle relative to the robot body of the cleaning robot in a horizontal direction to be less than a preset amplitude threshold value.

8. The method according to claim 1, **characterized by** further comprising:
in response to the type of the obstacle being a preset non-graspable obstacle type, adjusting a pose of the robotic arm such that at least a preset proportion of a projection of the robotic arm on the ground lies within a projection of the robot body of the cleaning robot on the ground; and performing a bypass cleaning operation.

9. The method according to claim 2, **characterized in that** when the height of the obstacle is greater than or equal to the first threshold value, the method further comprises:
performing a steering operation; and acquiring three-dimensional obstacle information by means of the first sensor system disposed on the robot body, wherein the three-dimensional obstacle information is used for determining the width, depth and type of the obstacle.

10. The method according to claim 1, **characterized in that** when the height of the obstacle is greater than or equal to the first threshold value and the width and depth of the obstacle exceed the second threshold value, the method further comprises:
in response to the type of the obstacle being a preset pushable obstacle type, controlling the robotic arm to push the obstacle.

11. The method according to claim 10, **characterized in that** when the height of the obstacle is greater than or equal to the first threshold value, and the width and depth of the obstacle exceed the second threshold value, in response to the type of the obstacle being the preset pushable obstacle type, the method further comprises:
controlling the robotic arm to push the obstacle away from an area in which the obstacle is originally located; and
adjusting a pose of the robotic arm such that at least a preset proportion of a projection of the robotic arm on the ground lies within a projection of the robot body of the cleaning robot on the ground, and cleaning the area in which the obstacle is originally located.

12. The method according to claim 10, **characterized in that** when the height of the obstacle is greater than or equal to the first threshold value and the width and depth of the obstacle exceed the second threshold value, the method further comprises:
in response to the type of the obstacle being a preset non-pushable obstacle type, performing a bypass cleaning operation.

13. The method according to claim 1, **characterized by** further comprising:
when the height of the obstacle is less than the first threshold value, in response to the type of the obstacle being a preset suctionable obstacle type, moving in a current direction of travel; and suctioning the obstacle through a main brush chamber.

14. The method according to claim 13, **characterized by** further comprising:
in response to the type of the obstacle being a preset non-suctionable obstacle type, performing a bypass cleaning operation.

15. The method according to claim 14, **characterized in that** in response to the type of the obstacle being the preset non-suctionable obstacle type, the method further comprises:
controlling the robotic arm to push the obstacle away from an area in which the obstacle is originally located; and
adjusting a pose of the robotic arm such that at least a preset proportion of a projection of the robotic arm on the ground lies within a projection of the robot body of the cleaning robot on the ground, and cleaning the area in which the obstacle is originally located.

16. A cleaning robot control method for use in a cleaning robot provided with a robotic arm and a sensor system capable of acquiring three-dimensional obstacle information, **characterized by** comprising:
when an obstacle is detected during the traveling of the cleaning robot, acquiring a height of the obstacle and a viewing angle of the cleaning robot relative to the obstacle by means of the sensor system;
when the height of the obstacle is greater than or equal to a first threshold value and the viewing angle of the cleaning robot relative to the obstacle is greater than a fourth threshold value, acquiring a height, width, depth and type of the obstacle by means of the sensor system disposed on the robotic arm of the cleaning robot; and
when the height of the obstacle is greater than or equal to the first threshold value, the width and/or depth of the obstacle does not exceed a second threshold value, and the type of the obstacle is a preset graspable obstacle type, controlling the robotic arm to grasp the obstacle, wherein the first threshold value is an upper limit value of a distance between a lower surface of a robot body of the cleaning robot and a ground, and the second threshold value is an upper limit value of a grasping range of a grasping portion of the robotic arm.

17. The method according to claim 16, **characterized by** further comprising, posterior to controlling the robotic arm to grasp the obstacle,
controlling the robotic arm to move and place the grasped obstacle in a first area; and
performing a return cleaning operation.

18. The method according to claim 16, **characterized by** further comprising:
in response to the type of the obstacle being a preset non-graspable obstacle type, adjusting a pose of the robotic arm such that at least a preset proportion of a projection of the robotic arm on the ground lies within a projection of the robot body of the cleaning robot on the ground; and performing a bypass cleaning operation.

19. The method according to claim 16, **characterized in that** the viewing angle of the cleaning robot relative to the obstacle is an included angle formed by tangents to an outer peripheral boundary of the obstacle from a first reference point of the cleaning robot;
wherein the first reference point is a point of points of intersection of a boundary of the robot body of the cleaning robot and a central axis of the cleaning robot that is close to the obstacle in a current direction of travel, and the central axis of the cleaning robot is parallel to the current direction of travel of the cleaning robot.

20. The method according to claim 19, **characterized in that** when the viewing angle comprises a horizontal viewing angle, the fourth threshold value comprises a horizontal angle-of-view threshold value; and
when the viewing angle comprises a vertical viewing angle, the fourth threshold value comprises a vertical angle-of-view threshold value; and when the viewing angle comprises both a horizontal viewing angle and a vertical viewing angle, the fourth threshold value comprises a horizontal angle-of-view threshold value and a vertical angle-of-view threshold value.

21. A cleaning robot, **characterized by** comprising: a robot body, a sensor system capable of acquiring three-dimensional obstacle information, a robotic arm, a processor, and a memory for storing processor-executable instructions;
wherein during the traveling of the cleaning robot, the instructions, when executed by the processor, cause steps of the cleaning robot control method according to any one of claims 1 to 20 to be implemented.

22. A computer-readable storage medium, **characterized by** comprising a program stored therein, wherein the program, when executed, causes the cleaning robot control method according to any one of claims 1 to 20 to be performed.
